# FASCICULE DE BREVET EUROPEEN

(11) **EP 4 557 526 B1**
(45) Date de publication et mention de la délivrance du brevet: **17.12.2025**
(21) Numéro de dépôt: 24212921.1
(22) Date de dépôt: 14.11.2024
(51) Int. Cl.: H01R 4/48

(54) **MODULE DE CONNEXION DE PUISSANCE, À SERRAGE D'UNE TERMINAISON DE CÂBLE ÉLECTRIQUE PAR UNE LAME DONT AU MOINS UNE PARTIE DÉFORMABLE DESTINÉ À CONSTITUER UNE PARTIE D'UN BORNIER D'UN ENSEMBLE DE CONNEXION**
LEISTUNGSANSCHLUSSMODUL ZUM KLEMMEN EINES ELEKTRISCHEN KABELABSCHLUSSES DURCH EIN BLATT, DESSEN MINDESTENS EIN VERFORMBARES TEIL ZUR BILDUNG EINES ANSCHLUSSBLOCKTEILS EINER VERBINDUNGSANORDNUNG BILDET
POWER CONNECTION MODULE, CLAMPING AN ELECTRICAL CABLE TERMINATION BY A BLADE OF WHICH AT LEAST ONE DEFORMABLE PART IS INTENDED TO FORM A PART OF A TERMINAL BLOCK OF A CONNECTION ASSEMBLY

(30) Priorité: 16.11.2023 FR 2312553
(43) Date de publication de la demande: 21.05.2025
(73) Titulaire: Radiall, 93300 Aubervilliers (FR)
(72) Inventeur: BECAVIN, Patrice, 37110 AUZOUER EN TOURAINE (FR); ROBERT, Flavien, 37270 MONTLOUIS SUR LOIRE (FR); SURAULT, Stéphane, 37240 MANTHELAN (FR)
(74) Mandataire: Ipsilon

(56) Documents cités:
- CN-U- 211 404 771
- FR-A- 1 241 495
- GB-A- 2 321 790
- US-A- 3 474 389

## Description

### Domaine technique

La présente invention concerne le domaine des connecteurs électriques de puissance.

Plus particulièrement, elle concerne les ensembles de connexion à borniers (« terminal blocks » en anglais).

Par « bornier », on entend ici et dans le cadre de la présente invention, un dispositif permettant d'assurer la continuité électrique entre un câble et une autre partie d'une installation. Un bornier, également connu sous le nom de borne de connexion ou borne à vis est un module isolé électriquement qui fixe ensemble deux fils/câbles électriques ou plus, destinés à être reliés électriquement entre eux, et comprend un support isolant et au moins un composant de serrage pour fixer les fils/câbles.

Par « contact », on entend ici et dans le cadre de la présente invention, un élément en matériau conducteur électrique pour laisser passer le courant électrique.

Bien que décrit en référence à une application privilégiée, l'aéronautique, et plus particulièrement le câblage d'avions, l'invention peut être mise en œuvre dans toute autre application qui nécessite une connexion de puissance, notamment plusieurs centaines d'ampères et/ ou de volts et particulièrement d'un grand nombre de câbles/fils électriques entre eux dans une zone de jonction.

### Technique antérieure

Une des opérations de câblage d'avions consiste à relier électriquement entre eux un grand nombre de câbles/fils électriques de puissance.

Cette opération est usuellement mise en œuvre en utilisant un bornier à vis, fixé à la structure de l'avion, et dans lequel la pluralité de câbles/fils électriques est insérée puis fixée par serrage.

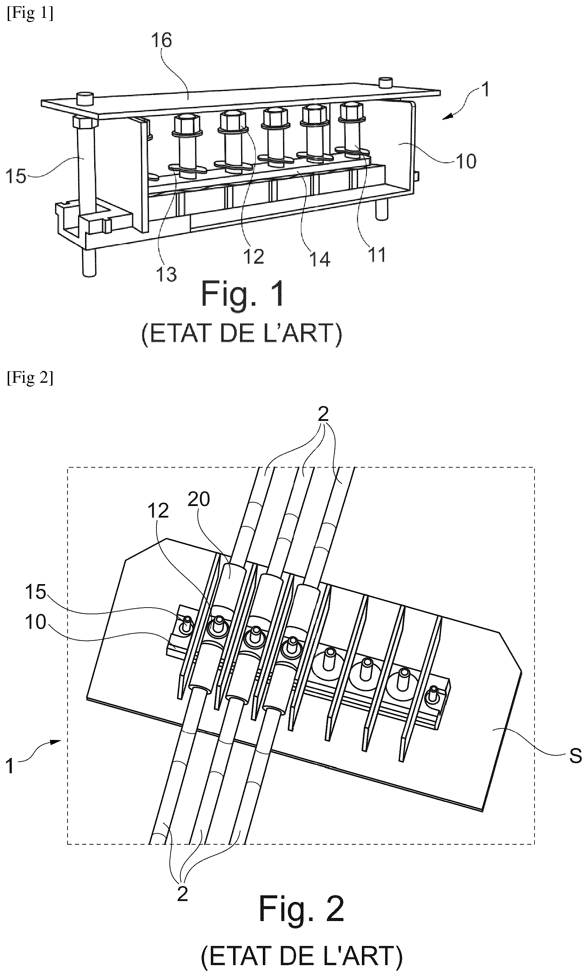

On a représenté en figures 1 et 2, un exemple d'un tel bornier existant, globalement désigné par la référence 1, qui est conçu pour relier deux ou plusieurs câbles 2 électriques équipés de cosses 20 à leurs extrémités par un système vis-écrou.

Ce bornier 1 comprend tout d'abord un support électriquement isolant 10 dans lequel sont fixés des vis de bornes 11 qui forment chacune avec un écrou 12 un système vis-écrou de serrage des cosses 20 équipant les câbles 2.

Une rondelle, notamment électriquement conductrice, 13, de type rondelle ondulée, est prévue pour chaque système vis-écrou.

Une barre électriquement conductrice 14 est traversée par chaque vis de bornes 11. Cette barre 14 forme une surface d'appui pour les cosses 20 de câbles et constitue ainsi un shunt électrique entre les câbles 2 à relier électriquement. Cette plaque 14 est optionnelle et chaque vis 11 est indépendante électriquement. De manière alternative, la plaque 14 peut ne s'étendre que sur une partie de longueur et ne connecter électriquement qu'une partie des vis.

Le support 10 est fixé à une structure S d'avion par des vis à colonnette 15.

Un capot 16 maintenu par les vis à colonnette 15 forme un capot de protection des systèmes vis-écrou 11, 12.

Le bornier 1 n'étant pas étanche, un capot supplémentaire appelé communément « parapluie » est fixé à la structure de l'avion, au-dessus du bornier pour empêcher l'humidité condensée de venir ruisseler directement sur les câbles 2 reliés dans le bornier.

Outre cet aspect non étanche, un tel bornier 1 à vis présente de nombreux inconvénients majeurs.

Tout d'abord, les cosses 20 doivent être parfaitement orientées pour être enfilées autour des vis de bornes 11 en vue d'une connexion électrique satisfaisante. Cela implique la plupart du temps pour un opérateur d'avoir à détorsader les câbles 2.

Le nombre de pièces à gérer (vis, écrous, rondelles, barre de shunt, capot, pièce parapluie) pour un opérateur en charge du montage est important avec, de surcroît, un risque élevé de pertes de pièces qui induit donc un risque de corps étranger, ou débris mécanique (FOD acronyme anglo-saxon pour « Foreign Object Damage ») pouvant causer des dommages, ce que l'on cherche absolument à éviter dans le domaine de l'aéronautique.

Ce risque de pertes de pièces est d'autant plus important que les zones dans lesquelles les borniers 1 existants sont mis en place ont un accès difficile et/ou très restreint et/ou une localisation gênante pour l'opérateur. Par exemple, le support isolant 10 est usuellement fixé du côté du plafond dans la structure d'un avion. Cela peut impliquer que les cosses installées sur les vis 11 ne tiennent pas en place avant d'avoir également mis en place un écrou 12. Autrement dit, il n'existe pas de fonction de pré-maintien en position des cosses sur les vis. En plus des opérations intrinsèques de serrage par vis qui peuvent être longues pour un opérateur dédié, un autre opérateur est dédié systématiquement à la vérification de couples de serrage appliqués pour la fixation des cosses 20 des câbles.

Aussi, un bornier à vis nécessite de ne pas mettre les câbles sous tension pour éviter les risques électriques pour les opérateurs en charge de la connexion électrique. Ces risques ne peuvent d'ailleurs être complètement écartés lors de tests pour vérifier le bon fonctionnement.

Ainsi, au final, le temps d'installation d'un bornier à vis est long.

En outre, les cosses 20 peuvent nécessiter d'être orientées à 180°, ce qui est peu compatible avec des câbles de puissance qui sont rigides, typiquement d'un diamètre de l'ordre de AWG 000 (unité de mesure « American Wire Gauge »), soit de 10,4 mm.

Enfin, les borniers à vis ne permettent pas d'avoir une modularité car le nombre de câbles 2 qui peuvent être reliés dans un seul et même bornier est figé.

Le brevet GB2321790 A divulgue un module de connexion électrique selon le préambule de la revendication 1.

Le brevet US10998649B2 divulgue un bornier dans lequel, après son insertion dans une cavité d'un corps, un conducteur de câble électrique est serré entre une lame fixe et une lame mobile et déformable, actionnée par un levier rotatif directement par un opérateur. Cette solution n'est pas adaptable directement à une terminaison de câble. En outre, l'effort de serrage est réduit. Et enfin, il n'y a pas de verrouillage du conducteur inséré. L'encombrement d'actionnement du levier rotatif est également important, nécessitant une bonne accessibilité pour la main de l'opérateur. Or un tel accès est loin d'être possible dans un environnement aéronautique. La détection de la bonne insertion du câble n'est également pas réalisée.

CN211404771U divulgue également un bornier dans lequel le serrage d'un conducteur de câble est réalisé par déformation d'une lame de contact au moyen d'une vis de pression.

Cette solution présente les mêmes inconvénients que celle du brevet US10998649B2. En outre, la fin de l'effort de serrage ne peut pas être déterminé car directement lié au vissage manuel réalisé. Aucune détection de la bonne insertion, à la bonne profondeur, du conducteur n'est réalisée.

Pour améliorer les borniers existants, la Demanderesse a proposé dans la demande EP3758165 de brevet un ensemble de connexion qui permet d'apporter plus de modularité, de faciliter l'installation, plus particulièrement dans des zones d'accès restreint et/ou pour un nombre important de fils/câbles électriques à relier, et de protéger les opérateurs en charge de la connexion contre les risques électriques.

Bien que cette solution donne entière satisfaction, il existe encore un besoin d'amélioration, notamment pour le passage de fortes intensités, typiquement jusqu' à 400 A qui implique une forte pression de contact et donc un effort de connexion élevé, et ce, sans qu'une usure prématurée des contacts apparaisse.

L'invention vise à répondre à tout ou partie de ce besoin.

### Exposé de l'invention

Pour ce faire, l'invention a pour objet, selon l'un de ses aspects, un module de connexion électrique, destiné à constituer une partie d'un bornier d'un ensemble de connexion, d'axe longitudinal (X) comprenant :
- au moins un corps en matériau électriquement isolant comprenant au moins une cavité s'étendant selon l'axe X et adaptée pour loger une terminaison de câble électrique, comprenant un contact, de préférence cylindrique, destiné à être raccordé, de préférence serti sur un câble électrique;
- au moins une lame comprenant au moins une partie d'une lame, qui est électriquement conductrice et électriquement conductrice, logée fixement ou avec jeu au moins en partie dans la cavité, et au moins une partie d'une lame, qui est élastiquement déformable entre une position de repos dans laquelle elle définit un espace adapté pour permettre l'insertion, selon l'axe X, du contact de la terminaison de câble électrique, et une position déformée dans laquelle elle serre, transversalement à l'axe X, le contact de la terminaison de câble électrique de sorte à établir une continuité électrique entre le contact et la (les) lame(s).
- au moins un mécanisme de serrage, destiné à être actionné par rotation depuis l'extérieur comprenant un moyen de transformation d'une rotation en une translation, transversalement à l'axe X, qui exerce un effort (F) sur la partie déformable de lame pour l'amener depuis sa position de repos dans sa position déformée de serrage du contact de la terminaison de câble électrique.

Autrement dit, l'invention consiste essentiellement en un module pour un ensemble de connexion à bornier avec un corps muni d'une cavité dans laquelle après y avoir été inséré un contact de terminaison de câble y est serré entre une partie fixe et une partie déformable transversalement au contact d'une lame, le serrage étant effectué depuis l'extérieur par un outil et par l'intermédiaire d'un mécanisme de serrage à came et pièce de transmission d'effort, ou à levier, logé dans le corps du module.

Le mécanisme de serrage à came assure le serrage individuel d'un contact de terminaison afin de garantir une continuité électrique souhaitée et ce avec un effort important et dans un encombrement réduit au sein du module dont le corps est de faibles dimensions.

Avantageusement, la pièce de transmission d'effort est configurée pour pouvoir s'insérer dans une gorge transversale du contact de terminaison afin d'indiquer le bon positionnement (insertion) du contact dans la cavité. En cas d'insertion non correcte, la pièce de transmission d'effort vient buter contre une partie du contact, de préférence cylindrique, qui n'autorise pas l'actionnement du mécanisme de serrage. Par ailleurs, la pièce de transmission d'effort empêche tout glissement du contact entre les tôles.

En option avantageuse, un dispositif de verrouillage permet de verrouiller le mécanisme dans la position déformée de la lame et donc dans la configuration de serrage du contact pour la continuité électrique recherchée.

La(les) lame(s) sont conformées pour constituer au moins deux, avantageusement trois zones d'appui linéique ou surfacique direct avec le contact de la terminaison électrique dans la position déformée de la deuxième lame.

Ces zones d'appui linéiques ou surfaciques sont réparties angulairement, de préférence de manière régulière, à la périphérie du contact. Avantageusement, trois zones d'appui linéique sont agencées sensiblement à 120° l'une de l'autre.

Avec ces zones d'appui réparties angulairement autour du contact, on assure ainsi un serrage bien réparti autour d'un contact cylindrique de terminaison électrique.

Selon un mode de réalisation avantageux de l'invention, le module comprend une seule lame de section transversale à l'axe X, sensiblement en U.

Selon ce mode, le mécanisme de serrage comprend avantageusement un levier monté pivotant dans le corps et accessible depuis l'extérieur de sorte déformer au moins l'une des deux branches du U et ainsi l'amener de sa position de repos à sa position déformée.

Selon un autre mode de réalisation avantageux de l'invention, le module comprend au moins une première lame, électriquement conductrice, logée dans la cavité et rigide, et au moins une deuxième lame, électriquement conductrice, logée dans la cavité et comprenant au moins une partie déformable élastiquement entre la position de repos et la position déformée.

Selon cet autre mode de réalisation, le mécanisme de serrage comprend:
- une pièce de transmission d'effort, logée dans le corps,
- une pièce d'interface avec un outil (H), montée libre en rotation dans un logement du corps et adaptée pour être mise en rotation par l'outil,
- une came de serrage, solidaire ou réalisée intégralement avec la pièce d'interface, la rotation de la came de serrage provoquant la translation de la pièce de transmission d'effort, transversalement à l'axe X, qui exerce un effort (F) sur la deuxième lame pour l'amener depuis sa position de repos dans sa position déformée de serrage du contact de la terminaison de câble électrique.

Avantageusement, la pièce d'interface peut comprendre une empreinte d'interface avec l'outil, de préférence une empreinte hexagonale creuse.

Selon une variante de réalisation avantageuse, le corps du module et/ou la pièce d'interface comprend(nnent) au moins un indicateur visuel agencé de sorte à être visible par un opérateur pour lui indiquer la position du serrage correct du contact de la terminaison électrique. Le corps du module et/ou la pièce d'interface peu(ven)t ainsi comprendre, en tant qu'indicateur visuel une zone de couleur apparente.

Selon une variante de réalisation avantageuse, la pièce de transmission d'effort comprend une portion de verrouillage adaptée pour s'insérer, lors de la translation de ladite pièce, dans une gorge périphérique du contact de la terminaison électrique et ainsi verrouiller ce dernier dans le corps, de préférence avant ou simultanément au serrage du contact. Ainsi, le contact de terminaison est bloqué dans une position correcte d'insertion avant que l'effort de serrage ne soit appliqué sur lui.

Selon une caractéristique avantageuse, la portion de verrouillage présente une forme complémentaire à celle de la gorge périphérique du contact de la terminaison électrique.

Selon une configuration avantageuse, la deuxième lame est montée libre dans la première lame à l'une de ses extrémités, et libre à l'autre de ses extrémités.

De préférence, la came de serrage est montée en rotation entre deux branches de la première lame. On améliore ainsi la reprise des efforts mécaniques, notamment dans des environnements contraignants en température.

Selon une variante avantageuse, la pièce de transmission d'effort comprend en outre une portion de rappel pour ramener dans sa position de repos la deuxième lame, lors du desserrage après déverrouillage du contact.

Selon un mode de réalisation avantageux, le corps comprend une ouverture en regard de la cavité, munie intérieurement d'au moins une excroissance ou d'une pluralité de rainures droites longitudinales, de préférence réparties régulièrement angulairement, adaptées chacune pour respectivement être reçu entre deux nervures adjacentes du manchon de la terminaison de câble électrique, ou recevoir une cannelure droite ménagée autour du manchon. L'(les) excroissance(s) ou les cannelures du manchon de la terminaison permettent une reprise des efforts de torsion du câble sur le corps du module. De plus, elles permettent d'empêcher la rotation du contact par glissement, une fois serré dans le module de connexion.

En choisissant des faibles secteurs angulaires entre cannelures, on obtient une insertion du contact dans le module qui n'exige pas d'indexation angulaire.

Selon un mode de réalisation avantageux, le module comprend un dispositif de verrouillage/déverrouillage du mécanisme de serrage, lorsque la came de serrage est dans sa position de rotation correspondant à la position déformée de la deuxième lame.

Selon une première variante de réalisation, le dispositif de verrouillage comprend:
- un trou réalisé dans la pièce d'interface,
- un pion rigide monté sur un ressort, de préférence un ressort hélicoïdal de compression, le pion avec le ressort étant logés à l'intérieur du corps du module de telle sorte que, dans la position déformée de la deuxième lame, le pion est inséré dans le trou avec le ressort exerçant un effort de rappel sur le pion et par-là réalise le verrouillage du mécanisme de serrage, son déverrouillage étant réalisé par un couple de rotation appliqué à la pièce d'interface, qui est adapté pour vaincre l'effort de rappel du ressort.

Selon une deuxième variante de réalisation, le dispositif de verrouillage comprend:
- une rainure réalisée dans la pièce d'interface,
- une lame rigide sur un ressort, de préférence un ressort hélicoïdal de compression, la lame rigide étant logée partiellement et le ressort étant logé à l'intérieur du corps du module de telle sorte que, dans la position déformée de la deuxième lame, l'extrémité libre de la lame est insérée dans la rainure avec le ressort exerçant un effort de rappel sur la lame et par-là réalise le verrouillage du mécanisme de serrage, son déverrouillage étant réalisé par une poussée sur une portion de la lame faisant saillie du corps, qui est adaptée pour vaincre l'effort de rappel du ressort.

Selon une troisième variante de réalisation, le dispositif de verrouillage comprend :
- au moins un pion réalisé à la périphérie de la pièce d'interface ou de la came serrage,
- un ressort, de préférence un ressort hélicoïdal de compression, logé à l'intérieur du corps du module de telle sorte que, dans la position déformée de la deuxième lame, le ressort exerçant un effort de rappel de la pièce d'interface et la came de serrage pour coincer le pion dans le corps en dégageant la pièce d'interface du corps, et par-là réalise le verrouillage du mécanisme de serrage, son déverrouillage étant réalisé par une poussée sur la pièce d'interface, adaptée pour vaincre l'effort de rappel du ressort.

Selon une quatrième variante de réalisation, le dispositif de verrouillage comprend:
- une fente réalisée sur une face extérieure du corps, à la périphérie de la pièce d'interface,
- une patte flexible, solidaire ou réalisée intégralement avec la pièce d'interface de telle sorte que, dans la position déformée de la deuxième lame, l'extrémité libre de la patte s'insère dans la fente, et par-là réalise le verrouillage du mécanisme de serrage, son déverrouillage étant réalisé par un dégagement de l'extrémité libre de la patte, adapté pour vaincre l'effort de rappel de la patte flexible

Selon une cinquième variante de réalisation, le dispositif de verrouillage:
- une pièce d'interface avec un outil, montée libre en rotation dans un logement du corps et adaptée pour être mise en rotation par l'outil, la pièce d'interface étant une pièce cylindrique pourvue d'un méplat en formant ainsi une came,
- une pièce de verrouillage, dont une paroi s'étend transversalement à l'axe longitudinal X, montée en translation dans le corps entre une position de verrouillage du mécanisme de serrage, et une position de déverrouillage, la pièce de verrouillage étant agencée relativement à la pièce d'interface, de sorte que lorsque cette dernière est :
   dans sa position de déverrouillage, la partie cylindrique de la came interfère mécaniquement avec une autre paroi de la pièce, ce qui empêche le passage à sa position de verrouillage,
   dans sa position de verrouillage, toute rotation de la came met son méplat en butée contre une portion droite de ladite autre paroi de la pièce de verrouillage, ce qui empêche le passage à sa position de déverrouillage.

Selon cette cinquième variante, lorsque la pièce est dans sa position de verrouillage, la paroi est en saillie à l'intérieur d'une ouverture, et lorsque la pièce est dans sa position de déverrouillage, ladite paroi est en retrait de l'intérieur de l'ouverture, la paroi étant adaptée pour s'insérer dans une gorge transversale du manchon de la terminaison électrique et ainsi verrouiller ce dernier dans le corps, de préférence après ou simultanément au serrage du contact.

Selon une première configuration de connexion, la première lame comprend une portion s'étendant à l'extérieur du corps et adaptée pour être reliée électriquement par soudure ou vissage à un busbar.

Le module de connexion électrique peut également être dédié à une connexion entre harnais, c'est-à-dire entre au moins deux terminaisons de câble électrique, distincts.

Ainsi, selon une deuxième configuration de connexion, le module comprend :
- deux corps alignés ou côte à côte et fixés entre eux ou formant une seule pièce monobloc,
- une seule première lame étant commune aux cavités des deux corps,
- au moins deux deuxième lames indépendantes l'une de l'autre, pour serrer chacun un contact,
- au moins deux mécanismes de serrage indépendants l'un de l'autre. Ainsi, on peut relier au moins deux terminaisons de câble électrique en série au sein d'un même module.

Selon ce deuxième mode et une variante de connexion entre une entrée de courant et trois sorties, on prévoit dans le module:
- chaque corps comprend au moins deux cavités alignées ou non, les cavités s'étendant de préférence parallèlement à l'axe longitudinal (X) du module,
- les deux deuxième lames d'un même corps étant reliées électriquement entre elles, de préférence commune aux cavités des deux corps, de sorte à réaliser un shunt électrique entre les au moins quatre terminaisons de câble électrique lorsque logées individuellement dans les cavités.

Selon une troisième configuration de connexion, le module comprend :
- deux corps alignés ou côte-à-côte et fixés entre eux ou formant une seule pièce monobloc,
- une seule première lame commune aux cavités des deux corps,
- une seule deuxième lame, comprenant plusieurs parties déformables indépendantes chacune pour serrer chacune un contact,
- au moins deux mécanismes de serrage indépendants l'un de l'autre.

L'invention a également pour objet, un ensemble de connexion à bornier, comprenant une pluralité de modules de de dimensions identiques ou différentes avec des cavités de dimensions identiques ou différentes pour loger des terminaisons électriques de dimensions identiques ou différentes.

L'invention a enfin pour objet une structure, notamment d'aéronef, comprenant au moins un module de connexion électrique tel que décrits précédemment et/ou au moins un ensemble de connexion à bornier tel que décrit ci-avant, de préférence fixé(s) sur un rail-support, destiné lui-même à être fixé à la structure.

Les avantages de l'invention sont nombreux par rapport à l'existant parmi lesquels on peut citer :
- la suppression des problèmes d'orientation des câbles, qui peuvent être très rigides, en remplaçant les cosses usuelles par des contacts cylindriques ;
- une diminution des temps d'installation des câbles électriques dans une structure, notamment une structure d'aéronef par un système de montage rapide qui garantit un serrage efficace des terminaisons de câble, sans nécessité d'un serrage dit au couple, c'est-à-dire en appliquant une force de serrage spécifique en vue d'obtenir le maximum de précision;
- un accouplement individuel de chaque terminaison électrique dans un module de connexion mono ou multi cavités ;
- un accouplement sans effort puisque, avant serrage, l'écart entre les deux lames permet une insertion aisée sans frottement, ce qui a en outre pour avantage de ne pas générer une usure du contact et/ou de son revêtement éventuel ;
- une forte pression de contact entre le contact électrique de la terminaison de câble et les lames de contact au sein du module, ce qui réduit la résistance électrique de contact et donc permet un passage de courant fort avec un échauffement réduit ;
- un centrage sur une longueur importante du contact de la terminaison entre les deux lames de contact au sein du module, qui conjugué à la forte pression de contact permet d'obtenir une résistance aux vibrations et à l'usure du revêtement éventuel du contact ;
- une détection du bon positionnement du contact de terminaison dans le module grâce au dispositif de verrouillage du mécanisme de serrage ;
- une indication à la fois visuelle (marquage sur le module en regard d'un indicateur sur la pièce d'interface) et sensitive (butée mécanique du contact de terminaison) du serrage correct du contact de terminaison dans le module ;
- la suppression dans une structure d'aéronef des pièces parapluies existantes grâce à la solution étanche avec modules de connexion qui loge de manière étanche les terminaisons électriques dans les cavités ;
- l'absence de risque de perte de pièce (FOD pour « Foreign Object Damage »), car la solution selon l'invention est sans pièce indépendante, détachable à installer ;
- une protection des opérateurs contre les risques électriques, du fait qu'ils n'ont plus qu'à manipuler directement des pièces isolantes électriques (modules et manchon isolant de terminaison) ;
- une grande modularité qui peut facilement s'adapter à différentes configurations de câblage ;
- le module de connexion est particulièrement adapté pour une ligne électrique à haute tension (plusieurs centaines de Volt), car il n'y a qu'un seul potentiel dans un module de connexion (phases et neutre sont séparés dans différents modules) et les lignes de fuite et d'isolement entre conducteurs électriques sont allongées.

Les applications envisagées pour un bornier avec des modules selon l'invention sont nombreuses parmi lesquelles on peut citer, le câblage des avions civils.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 représente en vue en perspective d'un exemple de bornier à vis selon l'état de l'art utilisé pour le câblage électrique dans les structures d'avion.
[Fig 2] la figure 2 est une autre vue en perspective d'un bornier à vis selon l'état de l'art montrant des harnais de câbles à cosses connectés dans le bornier.
[Fig 3] la figure 3 est une vue en perspective d'un module de connexion selon un premier mode de réalisation de l'invention, à deux corps symétriques fixés l'un à l'autre à cavités alignées logeant chacune un contact d'une terminaison de câble électrique.
[Fig 4] la figure 4 est une vue en éclaté du module selon la figure 3 avec les deux terminaisons de câble électrique.
[Fig 5] la figure 5 est une vue en coupe transversale réalisée au niveau du corps d'un module de connexion selon le premier mode de l'invention, montrant le serrage du contact d'une terminaison de câble réalisé dans la cavité du corps au moyen du mécanisme intégré dans ce dernier.
[Fig 6A], [Fig 6B] les figures 6A et 6B sont des vues en coupe transversale au niveau du mécanisme de serrage d'un module, montrant respectivement la position avant serrage et après serrage avec verrouillage d'un contact d'une terminaison de câble électrique.
[Fig 7A], [Fig 7B], [Fig 7C] les figures 7A, 7B et 7C sont des vues en perspective partielle et en écorché au niveau du mécanisme de serrage d'un module, montrant respectivement la position avant serrage, une position du contact d'une terminaison de câble électrique le rendant impossible à serrer et verrouiller et après serrage avec verrouillage du contact.
[Fig 8] la figure 8 reprend la figure 7C d'un autre point de vue en perspective.
[Fig 9A], [Fig 9B] les figures 9A et 9B sont des vues en coupe transversale au niveau du mécanisme de serrage d'un module selon une variante de réalisation, montrant respectivement la position après serrage avec verrouillage d'un contact d'une terminaison de câble électrique et la position de desserrage après déverrouillage, la seconde lame étant ramenée dans cette position par une portion de la pièce de transmission d'effort.
[Fig 10] la figure 10 est une vue en perspective et en coupe transversale d'un module de connexion selon un deuxième mode de réalisation de l'invention, avec un corps dont la cavité logeant un contact d'une terminaison de câble électrique.
[Fig 11] la figure 11 est une vue en perspective d'un module selon la figure 10 montrant après serrage avec verrouillage d'un contact d'une terminaison de câble électrique.
[Fig 12A], [Fig 12B], [Fig 12C] les figures 12A, 12B et 12C sont des vues en perspective d'une variante d'insertion avec blocage de la rotation d'un contact d'une terminaison de câble électrique dans un module.
[Fig 13] la figure 13 est une vue en coupe longitudinale d'une variante avec étanchéité d'un module de connexion selon l'invention avec deux corps fixés entre eux logeant chacun un contact d'une terminaison de câble électrique.
[Fig 14] la figure 14 est une vue en coupe transversale du module selon la figure 13 montrant l'étanchéité au niveau du mécanisme de serrage.
[Fig 15] la figure 15 est une vue en perspective et en écorché d'un module de connexion selon le premier mode avec deux corps logeant chacun deux cavités adjacentes, agencés côte-à-côte, montrant le shunt électrique réalisé au sein du corps de module par la lame déformable et la lame rigide.
[Fig 16] la figure 16 est une vue en perspective d'un mode de réalisation d'un module de connexion selon le premier mode avec deux corps logeant chacun deux cavités adjacentes, qui permet de réaliser une connexion électrique entre une terminaison électrique en entrée et trois en sortie.
[Fig 17] la figure 17 est une vue en coupe transversale d'un module selon la figure 16, montrant le shunt électrique réalisé au sein d'un même corps de module à la fois par la lame déformable et la lame rigide.
[Fig 18] la figure 18 est une vue en perspective et en écorché d'un module selon la figure 15, montrant le shunt électrique réalisé au sein d'un même corps de module mais uniquement avec lame rigide.
[Fig 19] la figure 19 est une vue en perspective et en écorché d'un module de connexion selon le premier mode avec deux corps logeant chacun deux cavités adjacentes, avec les lames rigides isolées l'une de l'autre et les lames déformables isolées également l'une de l'autre.
[Fig 20] la figure 20 est une vue en perspective et en écorché d'un module de connexion selon le premier mode, selon une variante à une seule deuxième lame monobloc comprenant deux parties déformables.
[Fig 21] la figure 21 est une vue en perspective d'un mode de réalisation d'un bornier à plusieurs modules de connexion connectés à un même busbar.
[Fig 22A], [Fig 22B] les figures 22A et 22B illustrent en vue de perspective et écorché partiel d'une première variante de verrouillage/déverrouillage du mécanisme de serrage d'un module de connexion selon l'invention, respectivement en position déverrouillée et verrouillée de ce dernier.
[Fig 23A], [Fig 23B] les figures 23A et 23B illustrent en vue de perspective et écorché partiel d'une deuxième variante de verrouillage/déverrouillage du mécanisme de serrage d'un module de connexion selon l'invention, respectivement en position déverrouillée et verrouillée de ce dernier.
[Fig 24A], [Fig 24B] les figures 24A et 24B illustrent en vue de perspective et écorché partiel d'une troisième variante de verrouillage/déverrouillage du mécanisme de serrage d'un module de connexion selon l'invention, respectivement en position déverrouillée et verrouillée de ce dernier.
[Fig 25A], [Fig 25B] les figures 25A et 25B illustrent en vue de perspective et écorché partiel d'une quatrième variante de verrouillage/déverrouillage du mécanisme de serrage d'un module de connexion selon l'invention, respectivement en position déverrouillée et verrouillée de ce dernier.
[Fig 26], [Fig 26A] les figures 26 et 26A sont des vues respectivement en perspective et en coupe longitudinale d'une terminaison électrique et d'un module de connexion selon un autre mode de l'invention avec deux corps fixés entre eux logeant chacun un contact d'une terminaison de câble électrique, avec un dispositif de verrouillage du contact de la terminaison et de sécurisation de ce verrouillage.
[Fig 27A], [Fig 27B] les figures 27A et 27B illustrent en vue de perspective partielle d'un module de connexion selon le mode des figures 26 et 26A, montrant le maintien en position de la pièce de verrouillage du dispositif pour permettre l'insertion d'un contact.
[Fig 28A], [Fig 28B] les figures 28A et 28B correspondent respectivement aux figures 27A et 27B en vue de dessus.
[Fig 29] la figure 29 illustre en vue en perspective partielle et en coupe longitudinale la position de la pièce de verrouillage dans sa position de déverrouillage.
[Fig 30A], [Fig 30B], [Fig 30C] les figures 30A, 30B et 30C sont des vues en perspective et en coupe longitudinale montrant les différentes étapes d'insertion et de verrouillage d'un contact dans un module selon les modes des figures 26 et 26A.
[Fig 31], [Fig 32] les figures 31 et 32 sont des vues de dessus montrant la sécurisation de verrouillage du contact à l'issue de l'étape de verrouillage selon la figure 30C.

### Description détaillée

Dans l'ensemble de la présente demande, les termes « vertical », « inférieur », « supérieur », « bas », « haut », « dessous » et « dessus» sont à comprendre par référence par rapport à un module de connexion électrique en configuration fixé, notamment à un rail-support, en étant agencé à l'horizontal.

De même, les termes «interne» et «externe » sont à comprendre par rapport à un corps de module de connexion électrique selon l'invention.

Par souci de clarté, une même référence numérique est utilisée pour un même élément d'un câble électrique selon l'état de l'art et d'un câble électrique selon l'invention.

Les figures 1 et 2 ont déjà été décrites en détail en préambule. Elles ne seront donc pas commentées ci-après.

Un même élément est désigné par une seule et même référence numérique dans l'ensemble des figures 1 à 32.

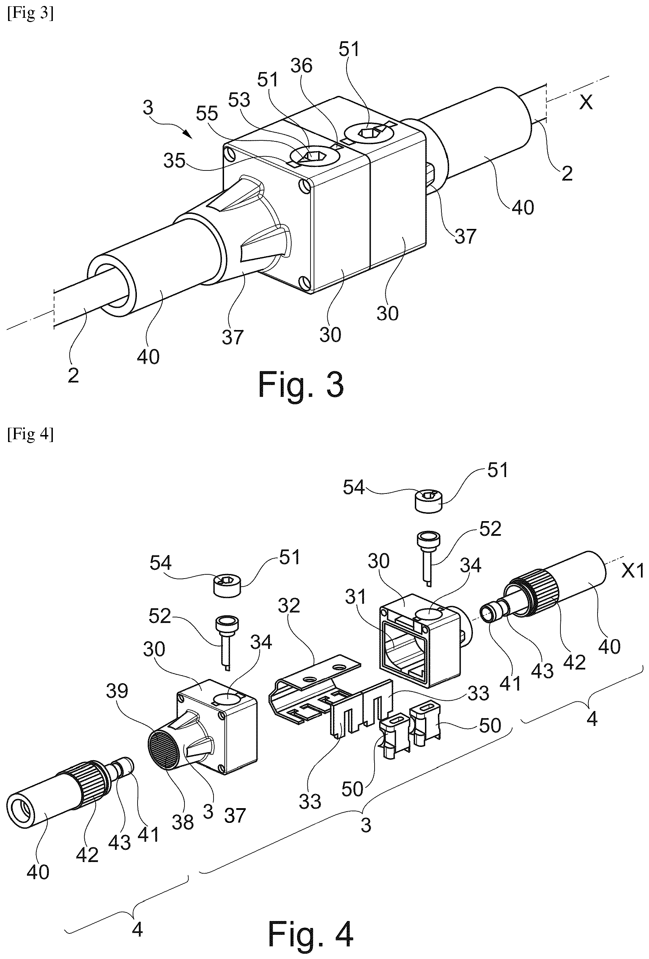

On a représenté sur les figures 3 et 4 un exemple de module de connexion électrique selon un premier mode de réalisation de l'invention, globalement désigné par la référence 3, destiné à former une partie d'un bornier d'un ensemble de connexion.

Ce module de connexion électrique 3 comprend deux corps 30, de préférence identiques ou symétriques, fixés l'un à l'autre. Les moyens de fixation entre les deux corps 30 ne sont pas représentés mais il peut s'agir de vis/écrous traversant de part en part les corps.

Chaque corps 30 est électriquement isolant d'axe longitudinal X, et destiné à loger, serrer, verrouiller et connecter au moins une terminaison 4 de câble électrique 2. Ce câble électrique 2 comprend une gaine extérieure 20 entourant un conducteur électrique 21.

Plus précisément, chaque corps 30 comprend une cavité 31 en son sein et les deux cavités 31, de préférence de même taille, sont en regard l'une de l'autre dans chacune desquelles une terminaison 4 de câble électrique 2 est insérée, serrée et verrouillée, comme expliqué ci-après.

Une terminaison de câble électrique 4, d'axe central X1 comprend un manchon électriquement isolant 40 et un contact électrique de forme cylindrique serti 41 sur un câble électrique 2, inséré et fixé notamment par encliquetage, à l'intérieur du manchon 40.

Le manchon 40 comprend sur sa périphérie extérieure des cannelures droites 42 qui s'étendent autour de l'axe central X1 sur une partie de la longueur du manchon.

Le contact cylindrique 41 est pourvu d'une gorge périphérique 43 qui permet la détection de l'insertion correcte et le verrouillage du contact 41 dans la cavité 31 d'un corps 30, comme expliqué par la suite.

Une première lame électriquement conductrice 32 est logée fixement ou avec un très faible jeu pour faciliter le montage dans chaque cavité 31 et le recentrage du contact de la terminaison après serrage contre la lame. Dans l'exemple illustré de la figure 4, cette première lame 32, de section générale en U est commune aux cavités 31 des deux corps 30.

Une deuxième lame 33, de préférence électriquement conductrice, est également logée dans chaque cavité 31. Cette deuxième lame 33 est élastiquement déformable entre une position de repos dans laquelle elle définit avec la première lame 32 un espace adapté pour permettre l'insertion, selon l'axe X, du contact 41 de la terminaison 4 de câble électrique, et une position déformée dans laquelle elle serre avec la première lame, transversalement à l'axe X, le contact de la terminaison de câble électrique de sorte à établir une continuité électrique entre le contact 41 et les première et deuxième lames 32 et 33.

Pour réaliser cette déformation de la lame 33 et donc le serrage du contact 41, le module 3 intègre un mécanisme de serrage 5 dans chaque corps 30, accessible depuis l'extérieur et actionnable par un outil qui permet de fournir un effort de serrage important.

Ce mécanisme 5 comprend une pièce de transmission d'effort 50 logée dans le corps 30, une pièce d'interface 51 avec un outil, montée libre en rotation dans un logement 34 du corps et adaptée pour être mise en rotation par l'outil, et une came de serrage 52, solidaire ou réalisée intégralement avec la pièce d'interface 51.

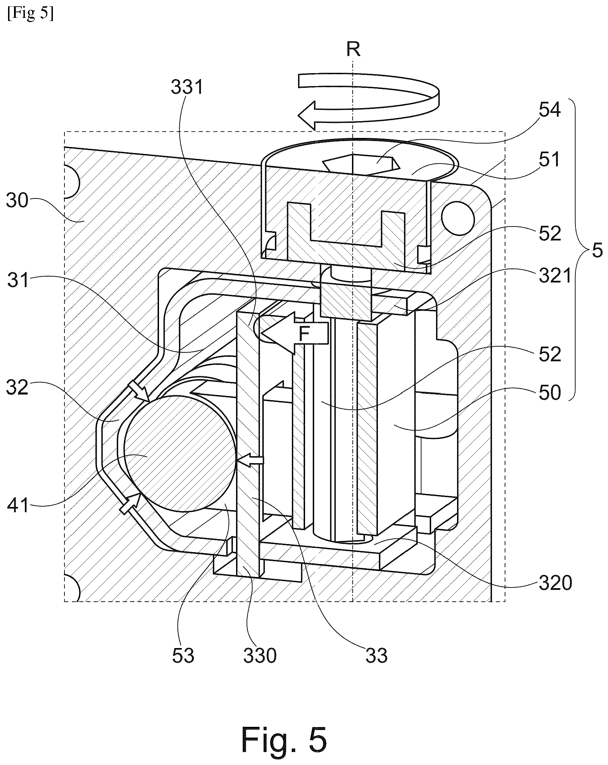

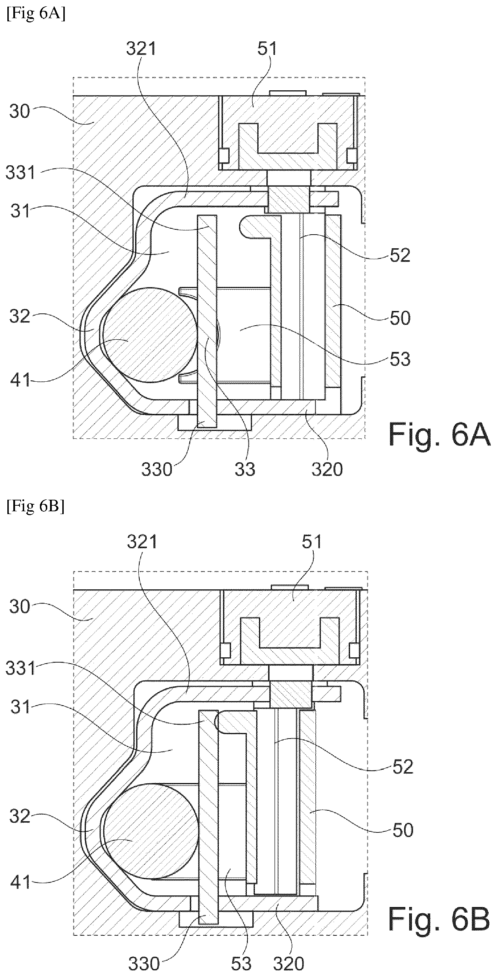

Comme montré à la figure 5, lorsqu'un contact 41 est inséré dans la cavité 31, la rotation de la came de serrage 52 réalisée par la rotation (R) de la pièce d'interface 51 provoque la translation de la pièce de transmission 50, transversalement à l'axe X, qui exerce par l'intermédiaire de la came 52 un effort (F) sur la deuxième lame 33 pour l'amener depuis sa position de repos (figure 6A) dans sa position déformée de serrage du contact 41 (figure 6B).

Comme également montré à la figure 5, les lames 32 et 33 sont avantageusement conformées pour constituer trois zones d'appui linéique direct, agencées sensiblement à 120° l'une de l'autre, telles que symbolisées par les flèches, avec le contact 41 dans la position déformée de la deuxième lame 33. Les trois zones d'appui linéique direct réparties angulairement permettent d'équilibrer le contact et de le stabiliser mécaniquement dans le module de connexion.

Selon un montage avantageux, la deuxième lame 33 est montée libre dans la première lame 32 à l'une de ses extrémités 330, et libre à l'autre de ses extrémités 331 (figures 5, 6A, 6B).

Selon un autre montage avantageux, la came de serrage 52 est montée en rotation entre deux branches 320, 321 de la première lame 32 (figures 5, 6A, 6B). Ainsi, on obtient non seulement un montage compact du mécanisme de serrage 5 et des lames 32, 33 mais également on améliore la reprise des efforts mécaniques transitant depuis la came vers la lame 32, notamment sous température élevée.

Une variante avantageuse consiste à réaliser la pièce de transmission d'effort 50 avec une portion de verrouillage 53 adaptée pour s'insérer, lors de la translation de la pièce 50, dans la gorge périphérique 43 du contact 41 de la terminaison électrique 4 et ainsi verrouiller ce dernier dans le corps, de préférence avant ou simultanément au serrage du contact. Comme montré à la figure 5, cette portion de verrouillage 53 présente de préférence une forme complémentaire à celle de la gorge périphérique 43 du contact 41.

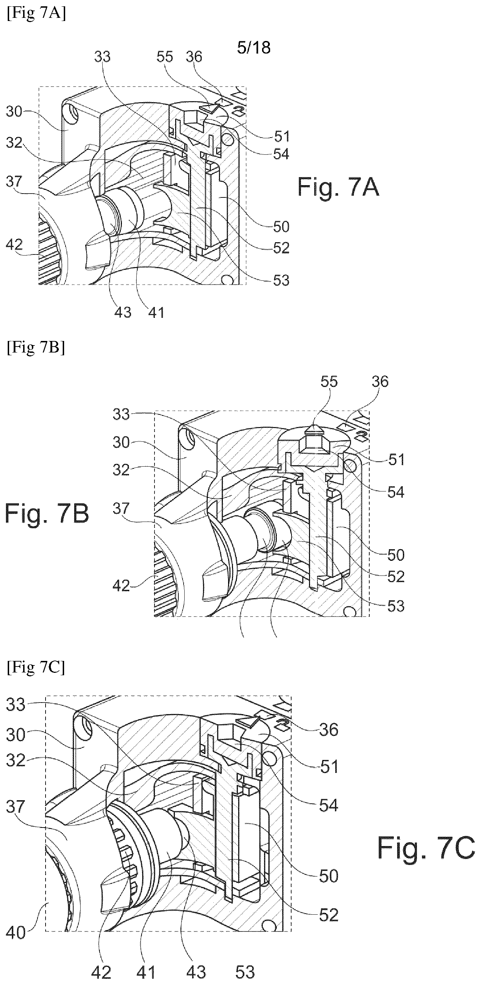

Ainsi, dans la position de repos de la lame 33 et en l'absence de rotation de la pièce d'interface 51, un contact 41 peut être librement inséré, i.e. sans effort, entre les lames 32 et 33 (figure 7A). A contrario, si la pièce d'interface a subi une rotation et n'est plus dans sa position ouverte, la portion de verrouillage 53 est en interférence mécanique avec le contact 41 lors de son insertion, empêchant un montage non conforme.

Si le contact 41 n'est pas inséré sur une course suffisante dans la cavité 31 du corps 30, la portion de verrouillage 53 de la pièce 50 bute sur la partie cylindrique du contact 41 (figure 7B). Ainsi, dans cette configuration, le verrouillage du contact 41 dans la cavité 31 est impossible ainsi que son serrage par la lame 33.

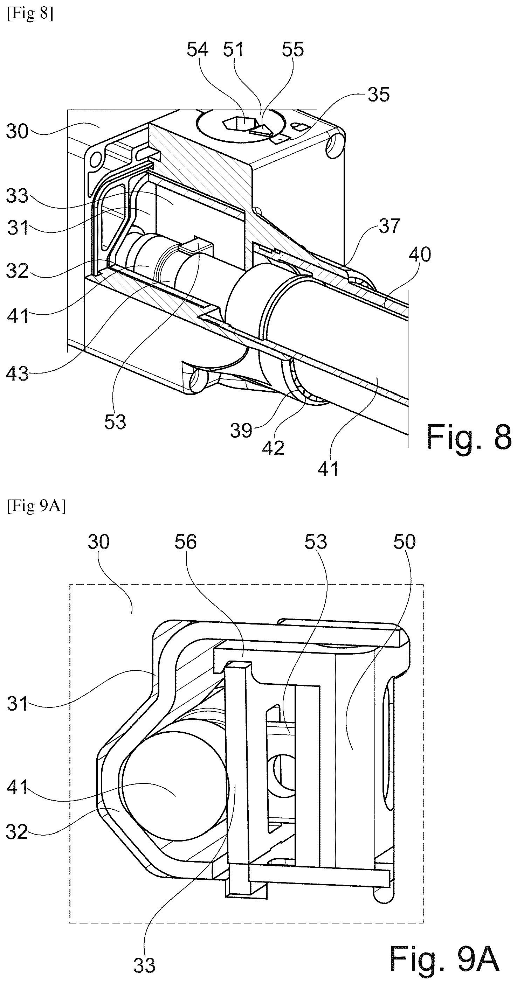

A contrario, si le contact 41 est correctement inséré dans la cavité 31 du corps 30, la portion de verrouillage 53 de la pièce 50 s'insère dans la gorge périphérique 43 du contact 41 et le verrouille ainsi dans la cavité 31 (figures 7C, 8). Autrement dit le contact est bloqué en translation selon l'axe X. Le serrage du contact 41 entre la lame fixe 32 et la lame 33 à déformer peut alors être effectué.

La pièce d'interface 51 peut comprendre une empreinte d'interface 54 avec l'outil, de préférence une empreinte hexagonale creuse. Un opérateur peut ainsi utiliser un outil usuel, externe tel qu'une clef à pans hexagonaux.

Selon une variante de réalisation avantageuse, le corps du module 30 comprend au moins un indicateur visuel 35, 36 et la pièce d'interface 51 comprend également au moins un indicateur visuel 55. Ces indicateurs visuels 35, 36, 55, notamment chacun sous la forme d'une zone de couleur apparente sont agencés sur la face supérieure du corps de sorte à être visibles par un opérateur pour lui indiquer la position du serrage correct du contact 41 de la terminaison électrique. Ainsi, dans l'exemple illustré, un indicateur 55 de la pièce d'interface 51, sous la forme d'une flèche de couleur, est positionnée en regard d'un indicateur 35 du corps, d'une première couleur, par exemple verte lorsque le serrage est effectué et en regard d'un indicateur 36, d'une deuxième couleur, dans une position de desserrage complet du contact, qui correspond à la position au repos de la lame 33.

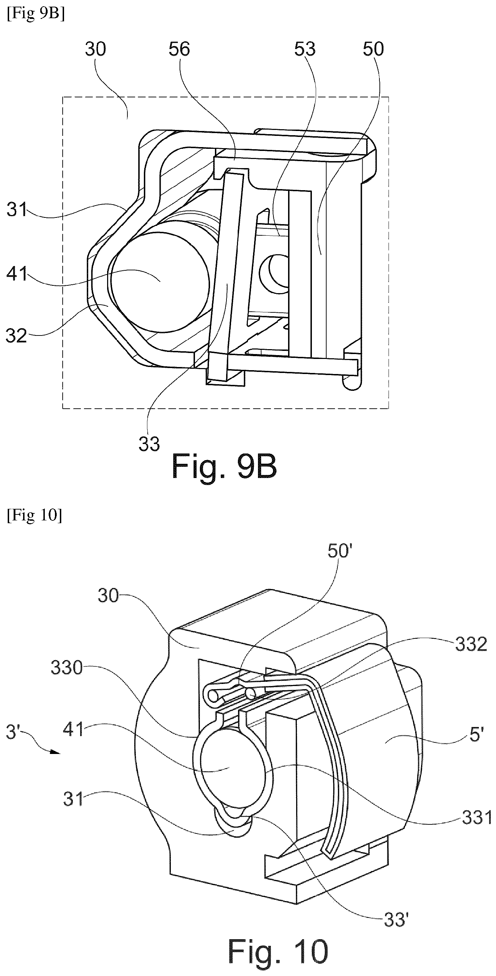

Dans une variante avantageuse, la pièce de transmission d'effort 50 peut également comprendre une portion de rappel 56 qui est accrochée à l'extrémité libre de la lame 33. Dans l'exemple illustré, cette portion de rappel 56 coiffe en quelque sorte cette extrémité libre de lame 33. Ainsi, lors du déverrouillage du contact 41, cette portion de rappel 56 exerce une traction sur l'extrémité libre de la lame 33 et la ramène de sa position déformée (figure 9A) à sa position de repos (figure 9B).

On a représenté sur la figure 10, un exemple de module de connexion électrique selon un deuxième mode de réalisation de l'invention, globalement désigné par la référence 3', destiné également à former une partie d'un bornier d'un ensemble de connexion.

Ce module de connexion électrique 3' comprend un corps 30 électriquement isolant destiné à loger, serrer, verrouiller et connecter une terminaison 4 de câble électrique 2, telle que déjà décrite.

Ici le module 3' comprend une seule lame 33' dont la section transversale est sensiblement en forme de U, qui est logée dans la cavité 31 du module. Une des branches 330 du U est rigide et fixe, l'autre des branches 331 pouvant être déformée pour se rapprocher de la branche 330 fixe.

Le mécanisme de serrage 5' est ici constitué d'un unique levier monté pivotant autour de la branche fixe 330 en étant accessible depuis l'extérieur du corps 30.

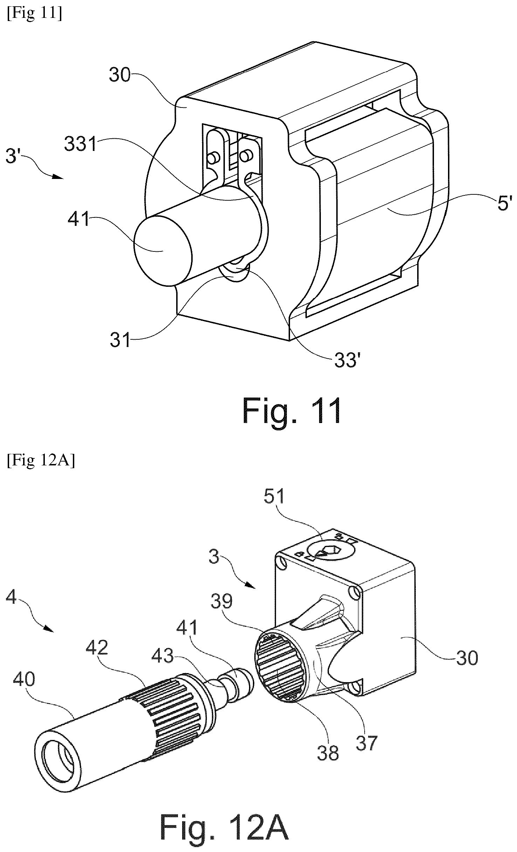

Ainsi, une fois le contact 41 inséré librement, sans effort, entre les deux branches 330, 331 écartées l'une de l'autre et dans la position de repos (figure 10), le pivotement du levier 5' vers le bas dans l'exemple illustré permet un logement avec blocage de l'extrémité libre 332 de la branche 331 dans un logement adapté 50' du levier, ce qui provoque le rapprochement par déformation de la branche 331 vers la branche 330 (figure 11). Ainsi, dans la position déformée de la branche 331, le contact 41 est serré, par les deux branches 330, 331 qui définissent deux zones d'appui surfacique direct avec le contact 41, en regard l'une de l'autre. Ces deux zones d'appui surfacique direct réparties angulairement permettent d'équilibrer le contact et de le stabiliser mécaniquement dans le module de connexion. Comme montré à la figure 11, la forme et les dimensions du levier 5' sont avantageusement choisies pour épouser au mieux l'extérieur du corps 30 du module, sans dépassement vers l'extérieur.

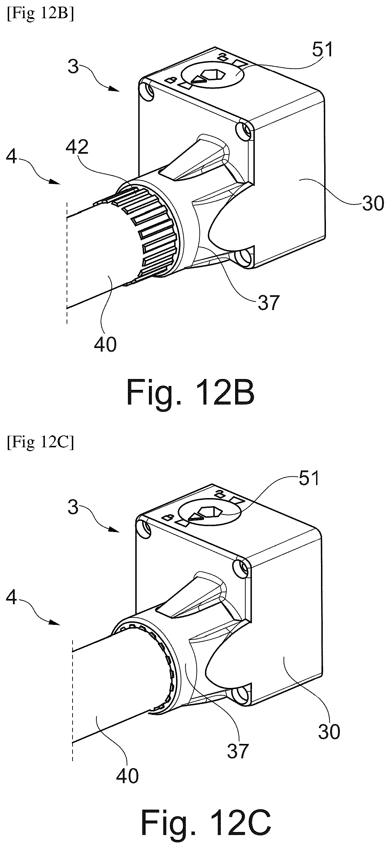

Comme montré en détail en figures 12A à 12C, on peut réaliser une partie du corps 30 de module et une terminaison de câble électrique 4 de sorte à bloquer en rotation cette dernière une fois son contact insérée dans une cavité 31.

Ainsi, comme montré, le corps 30 comprend un prolongement tubulaire avec une ouverture 38 en regard de la cavité 31, qui est munie intérieurement d'une pluralité de rainures droites longitudinales 39, de préférence réparties régulièrement angulairement, et qui sont adaptées chacune pour recevoir une cannelure droite 42 ménagée autour du manchon 40 de la terminaison de câble électrique 4.

Les cannelures 42 permettent une reprise des efforts de torsion du câble 2 sur le corps du module 3 et également empêchent la rotation du contact 41 par glissement, une fois inséré et serré dans le module de connexion 3.

Les cannelures 42 sont de préférences faiblement espacées angulairement les unes des autres, ce qui permet une insertion le contact 41 dans le corps 30 du module, sans avoir à l'indexer en rotation au préalable.

On peut envisager une variante étanche de connexion entre le(s) contact(s) 41 de terminaison 4 et le(s) corps 30 de module.

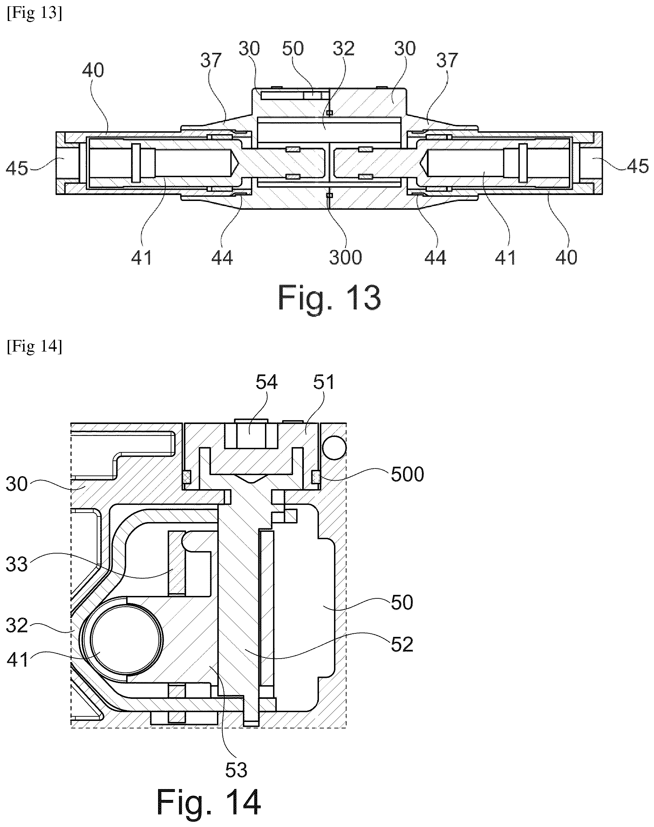

Comme montré à la figure 13, cette variante peut par exemple consister à implanter au moins un joint torique 44 sur l'extrémité libre du manchon 40, à l'interface avec le corps 30, et au moins un passe-câble annulaire 45 monté dans l'autre extrémité du manchon 40 à l'interface avec le câble 2.

On peut aussi prévoir un joint torique 300 à l'interface entre deux corps 30 fixés entre eux.

En sus, on peut prévoir un joint torique 500 agencé autour de la pièce d'interface 51, dans son logement (figure 14).

Les modules de connexion selon l'invention permettent différentes configurations de connexion entre harnais électriques à terminaison de câble électrique 4.

Comme décrit et illustré précédemment, un même module 3 peut comprendre deux corps 30, de préférence identiques ou symétriques, alignés en regard et fixés l'un à l'autre. Cela permet une connexion électrique avec une entrée et une sortie unique.

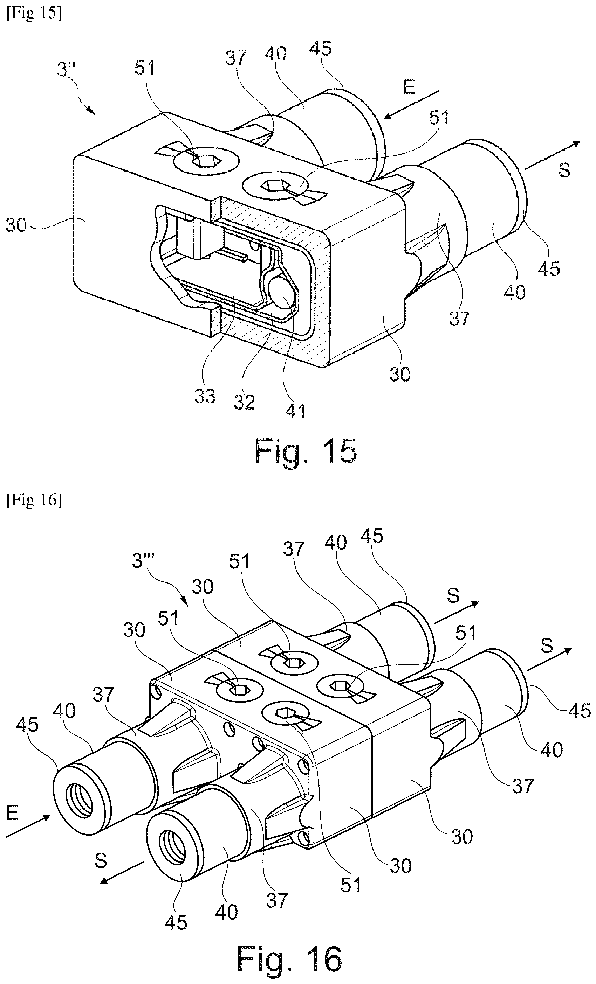

On peut aussi envisager un module de connexion 3" avec deux corps 30 agencés côte à côte, reliant électriquement deux terminaisons de câble arrivant d'un même côté du module (figure 15). Comme on peut le voir sur cette figure 15, une seule première lame 32 et une deuxième lame 33 sont logées dans les cavités 31. L'unique lame 33 comprend deux parties déformables indépendamment l'une de l'autre avec un mécanisme de serrage à came 51 et reliées électriquement entre elles, de sorte à réaliser un shunt électrique entre les deux terminaisons de câble électrique 4 lorsqu'elles sont insérées individuellement dans les cavités. Les deux corps 30 peuvent être fixés l'un à l'autre ou réalisés intégralement en une seule pièce monobloc.

Cette variante à corps de module côte-à-côte peut par exemple être mise en œuvre sur une même face d'un panneau.

D'autres configurations à plusieurs sorties sont possibles.

Les figures 16 à 18 illustrent une variante à une entrée électrique E et trois sorties électriques S avec un shunt électrique réalisé à l'intérieur des corps 30 d'un module de connexion 3" selon le premier mode.

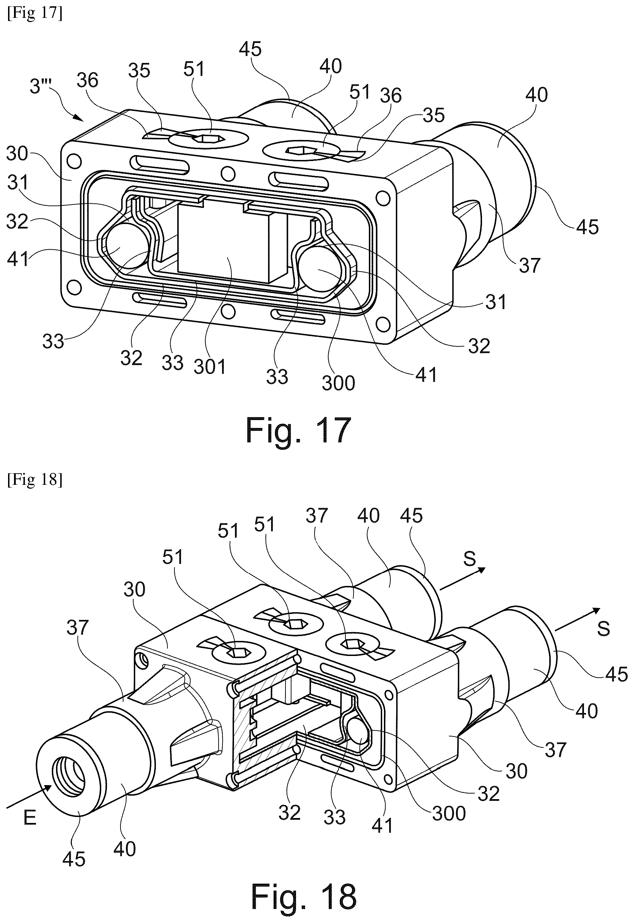

Plus précisément, comme montré sur les figures 17 et 18, le module 3"' comprend deux corps 30 alignés et fixés entre eux, chacun des corps 30 comprenant intérieurement deux cavités 31 s'étendant parallèlement à l'axe longitudinal (X) du module.

Chaque contact 41 est serré au moyen d'un mécanisme de serrage 5 indépendant des autres.

La première lame 32 est commune aux cavités 31 des deux corps 30.

Dans la variante de la figure 17, deux deuxième lames 33 indépendantes l'une de l'autre sont logées dans les cavités 31 et reliées électriquement entre elles, de sorte à réaliser un shunt électrique entre les quatre terminaisons de câble électrique 4 lorsqu'elles sont insérées individuellement dans les cavités.

Pour maintenir les lames 32, 33 à l'intérieur du corps 30, on peut prévoir une entretoise de maintien 301.

Une alternative pour réaliser le shunt électrique est montrée à la figure 18 : le shunt est réalisé uniquement par la première lame 32, les lames déformables 33 étant isolées électriquement l'une de l'autre.

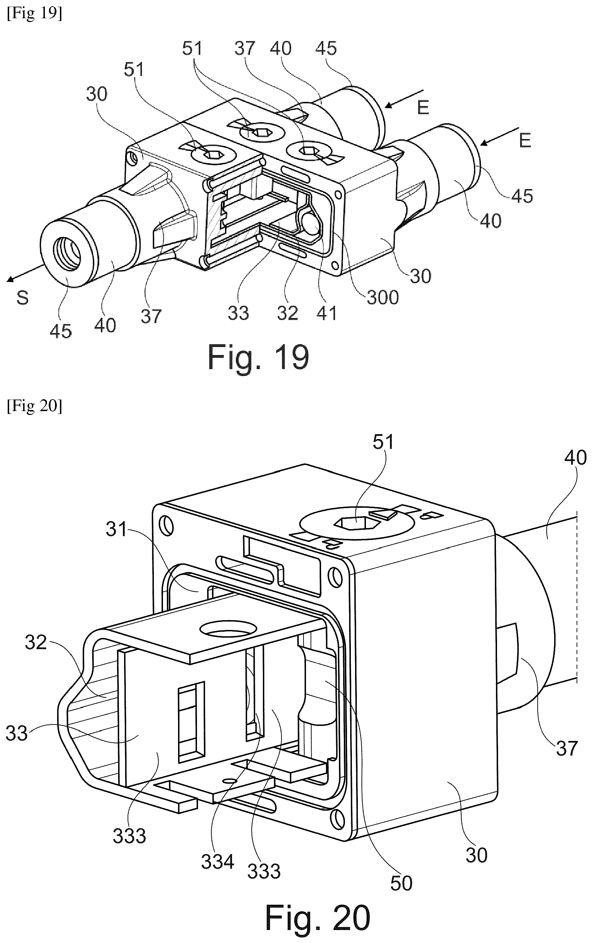

Une autre variante à deux entrées E et deux sorties S, illustrée à la figure 19, peut consister en deux corps 30 alignés et fixés comprenant chacun deux cavités 31, mais sans shunter les deux lignes électriques. Autrement dit, les deux lignes électriques traversent le module de connexion électriquement indépendamment l'une de l'autre. Dans cette variante, le module comprend deux premières lames fixes 32 indépendantes et isolées électriquement l'un de l'autre, et au moins une seconde lame déformable 33 par ligne électrique, isolées entre chaque ligne électrique.

Une alternative de réalisation de deuxième lame 33 est montrée à la figure 20 : on peut prévoir de réaliser une seule lame 33 sous la forme d'une pièce monobloc qui peut être logé dans deux cavités 31 en regard l'une de l'autre, avec des parties 333 élastiquement déformables indépendamment l'une de l'autre, par exemple en créant un ou plusieurs ajours de matière 334 entre elles.

Une autre configuration possible avec des modules de connexion selon l'invention est une connexion de plusieurs terminaisons 4 de câble électrique 2 à un busbar ou barre de connexion.

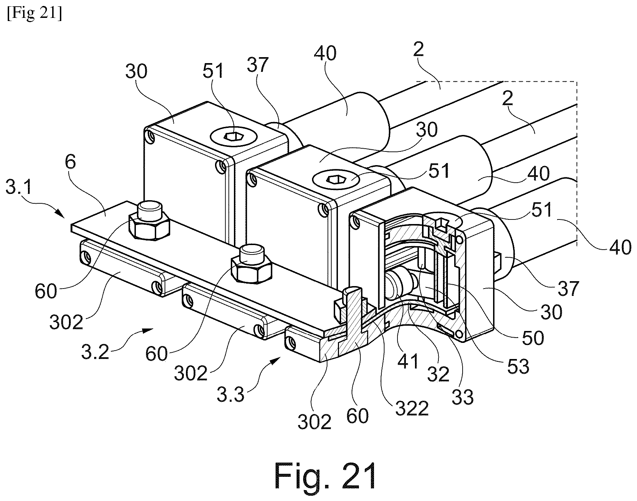

Une telle configuration est illustrée à la figure 21 avec trois modules 3.1, 3.2, 3.3, de préférence identiques, agencés parallèlement les uns à côté des autres. Dans cette configuration illustrée, chaque corps 30 des modules comprend une seule cavité 31 dans laquelle est insérée et serrée un contact 41 d'une terminaison 4 de câble électrique 2.

Chacune des premières lames 32 comprend une portion d'extension 322 qui s'étend à l'extérieur du corps 30.

Chaque corps 30 comprend un prolongement 302 de forme parallélépipédique droite, qui supporte une portion 322 d'une lame 32.

La connexion électrique parallèle entre les différentes lames 32 et donc entre les terminaisons 4 électrique s'effectue par un busbar 6 commun qui est fixé au moyen d'un vis/écrou 60 dans la portion d'extension 322 de chaque lame 32. On peut bien entendu envisager en lieu et place des vis/écrous 60 une fixation par soudure au busbar.

Pour garantir un anti-déverrouillage du contact 41 dans un corps 30 de module, qui pourrait se produire par exemple en cas de vibrations, chocs, ou autre, on peut munir un module 3 d'un dispositif de verrouillage/déverrouillage 7 du mécanisme de serrage 5.

Ce dispositif 7 est configuré pour être actif, lorsque la came de serrage 52 est dans sa position de rotation correspondant à la position déformée de la deuxième lame 33.

Plusieurs variantes de construction avantageuses peuvent être envisagées.

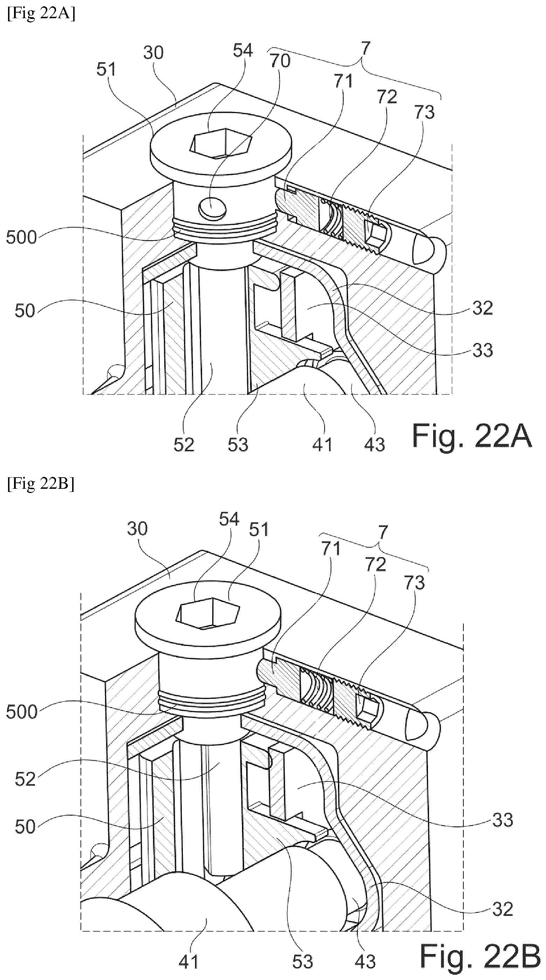

Les figures 22A et 22B montrent une première variante d'un tel dispositif 7 qui comprend :
- un trou 70 réalisé dans la pièce d'interface 51,
- un pion rigide 71 monté sur un ressort 72, de préférence un ressort hélicoïdal de compression. Une vis de réglage 73 permet de retenir le ressort dans le corps et de régler sa tension.

Ce pion 71 avec le ressort 72 sont logés à l'intérieur du corps 30 de telle sorte que, dans la position déformée de la deuxième lame 33, le pion 71 est inséré dans le trou 70 avec le ressort exerçant un effort de rappel sur le pion (figure 22B). On réalise ainsi le verrouillage du mécanisme de serrage 5. Son déverrouillage est réalisé par un couple de rotation appliqué à la pièce d'interface 51, qui est adapté pour vaincre l'effort de rappel du ressort 72 et donc sortir le pion 71 du trou 70 (figure 22A).

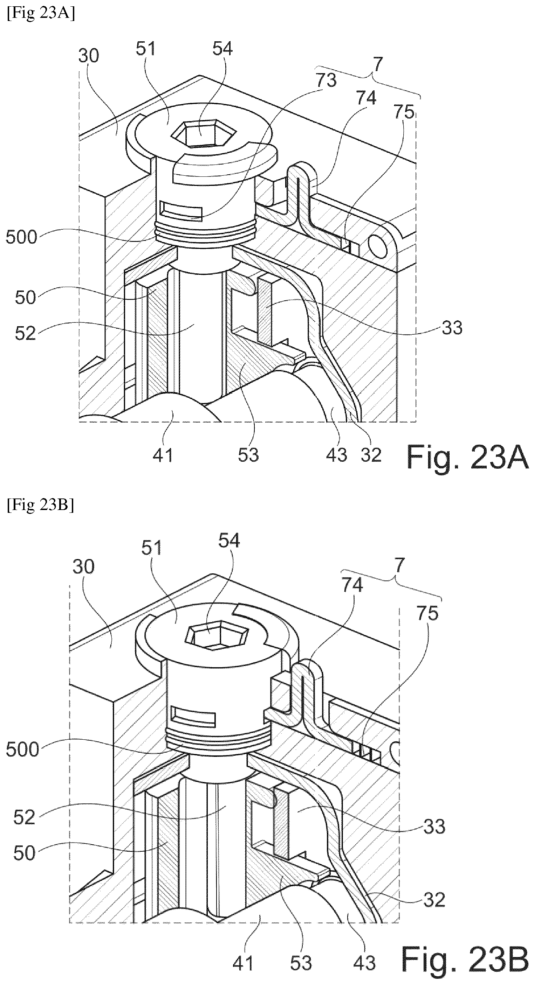

Les figures 23A et 23B montrent une deuxième variante d'un dispositif 7 qui comprend:
- une rainure 73 réalisée dans la pièce d'interface 51,
- une lame rigide 74 sur un ressort 75, de préférence un ressort hélicoïdal de compression.

La lame rigide 74 est logée partiellement et le ressort 75 est logé à l'intérieur du corps 30 de telle sorte que, dans la position déformée de la deuxième lame 33, l'extrémité libre de la lame 74 est insérée dans la rainure 73 avec le ressort exerçant un effort de rappel sur la lame (figure 23B). On réalise ainsi le verrouillage du mécanisme de serrage 5. Son déverrouillage est réalisé par une poussée sur une portion de la lame 74 faisant saillie du corps, qui est adaptée pour vaincre l'effort de rappel du ressort 75 et donc sortir la lame 74 de la rainure 73 (figure 23A).

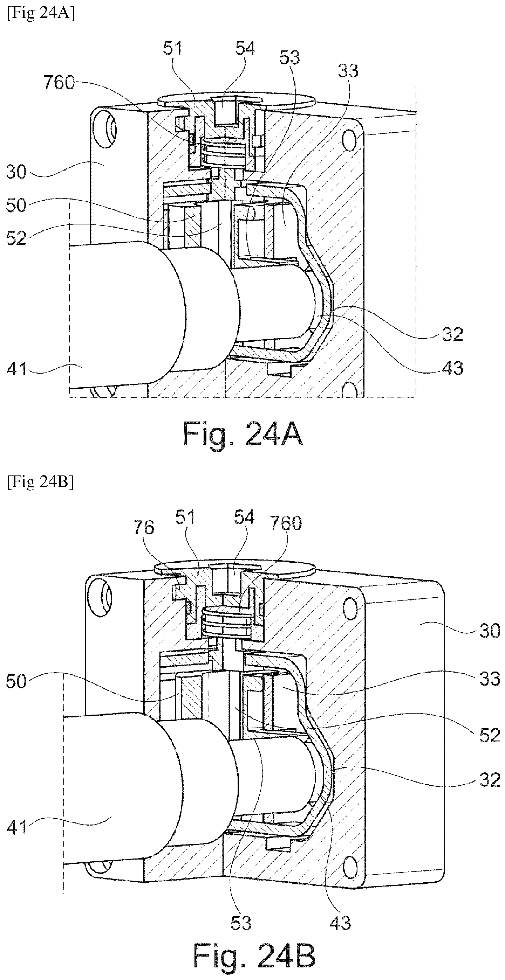

Les figures 24A et 24B montrent une troisième variante d'un dispositif 7 qui comprend:
- au moins un pion 76 réalisé à la périphérie de la pièce d'interface 51,
- un ressort 760, de préférence un ressort hélicoïdal de compression, logé à l'intérieur de la came 52.

En position déformée de la seconde lame 33, le ressort 760 repousse vers l'extérieur du corps 30 vers le haut, la pièce d'interface 51, dont le pion 76 est logé dans une rainure verticale aménagée dans le corps. Quand le pion 76 est logé dans la rainure verticale du corps, la rotation de la pièce d'interface 51 et de la came 52 est bloquée.

Pour desserrer le contact, un opérateur appuie verticalement vers le bas avec un outil, dans l'empreinte 54 de la pièce d'interface 51. Cette dernière s'enfonce dans le corps et comprime ainsi le ressort 760. En même temps, le pion 76 de la pièce d'interface quitte son logement et vient se loger dans une rainure circulaire horizontale aménagée dans le corps. Le mouvement de rotation de la pièce d'interface 51 devient alors possible, entraînant la rotation de la came 52, et donc le retour à la position de repos de la seconde lame 33 et ainsi le desserrage du contact.

On réalise ainsi le déverrouillage du mécanisme de serrage 5 (figure 24A).

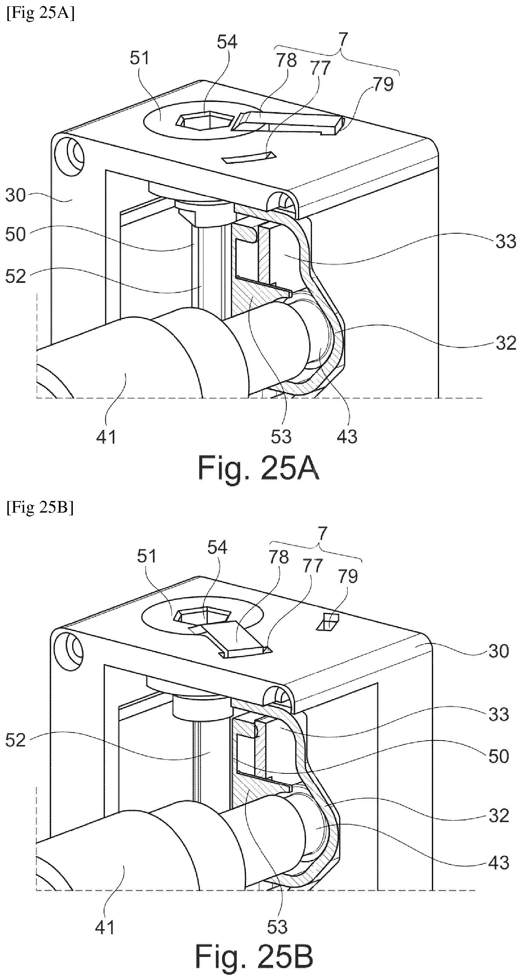

Les figures 25A et 25B montrent une quatrième variante d'un dispositif 7 qui comprend:
- une fente 77 réalisée sur une face extérieure du corps, à la périphérie de la pièce d'interface,
- une patte flexible 78, solidaire ou réalisée intégralement avec la pièce d'interface de telle sorte que, dans la position déformée de la deuxième lame 33, l'extrémité libre de la patte 78 s'insère dans la fente 77 (figure 25B). On réalise ainsi le verrouillage du mécanisme de serrage 5. Son déverrouillage est réalisé par un dégagement de l'extrémité libre de la patte 78, adapté pour vaincre l'effort de rappel de la patte flexible (figure 25A). On peut prévoir une autre fente 79 pour loger cette extrémité libre dans la position desserrée du contact 41 correspondant à la position de repos de la lame 33.

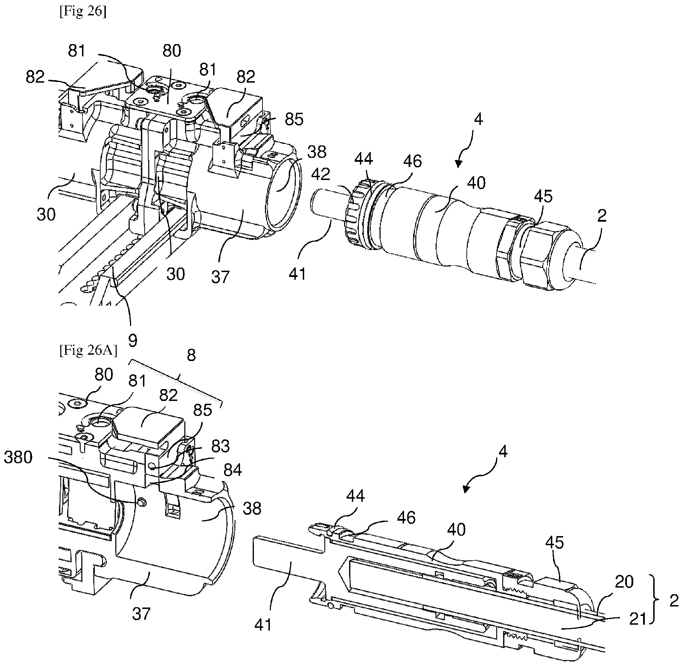

Les figures 26 et 26A montrent module de connexion selon un autre mode de réalisation de l'invention avec deux corps 30 fixés entre eux, destinés chacun à loger chacun un contact 41 d'une terminaison de câble électrique 4.

Selon cet autre mode, il est prévu un dispositif 8 de verrouillage/déverrouillage du mécanisme de serrage 5, une fois le contact 41 en position insérée dans une cavité 31 d'un corps 30. Le dispositif 8 permet également la détection de l'insertion à la bonne position longitudinale d'une terminaison dans le boîtier.

Tel qu'illustré, les corps 30 sont par ailleurs fixés à un rail-support 9 lui-même fixé à une structure, telle qu'une structure d'aéronef.

Dans ce mode, le manchon 41 comprend une gorge périphérique 46.

Le dispositif de verrouillage et de sécurisation de ce verrouillage 8 comprend tout d'abord une platine 80 fixée de préférence par vissage sur le corps 30.

Une pièce d'interface 81 est montée libre en rotation dans un logement du corps 30. Cette pièce 81 est une pièce cylindrique pourvue d'un méplat et forme ainsi une came. Cette came 81 peut être mise en rotation par un outil, par la présence d'une empreinte qui peut être usuelle. La pièce d'interface 81 est maintenue dans le logement du corps 30 par la platine 80.

Une pièce de verrouillage 82, 83 est montée en translation dans le corps 30 entre une position de verrouillage dans laquelle une paroi 83 de la pièce qui s'étend transversalement à l'axe longitudinal X est en saillie à l'intérieur de l'ouverture 38 et une position de déverrouillage dans laquelle ladite paroi 83 est en retrait de l'intérieur de l'ouverture 38. Dans cette position de déverrouillage, un contact 40 peut donc être inséré librement à l'intérieur du corps 30 pour être logé dans la cavité 31, puisque le manchon 40 peut coulisser librement à l'intérieur de l'ouverture 38, sans interférer avec la pièce de verrouillage 82, 83, en retrait de l'intérieur de l'ouverture 38.

La paroi de verrouillage 83 peut translater de sa position de déverrouillage à sa position de verrouillage dans une rainure 84 prévue à cet effet dans le corps 30, et ce par appui sur une autre paroi 82 de la pièce de verrouillage, dans le prolongement de la paroi 83.

La paroi 83 comprend en outre au moins un indicateur visuel 85. Cet indicateur visuel 85, notamment sous la forme d'une zone de couleur apparente est agencé sur la face extérieure de la paroi 83 de sorte à être visibles par un opérateur pour lui indiquer la position de verrouillage ou de déverrouillage du manchon 40 et donc du contact 41 de la terminaison électrique 4. Ainsi, dans l'exemple illustré, l'indicateur 85 de la paroi 83, sous la forme d'une zone de couleur, est positionné à l'extérieur du corps 30, lorsque la paroi 83 est en retrait de l'ouverture 38 et donc dans la position de déverrouillage et n'est plus visible de l'extérieur, dans la position en saillie à l'intérieur de l'ouverture 38 et donc dans la position de verrouillage du manchon 40 par la paroi 83.

Par ailleurs, la platine 80 peut comprendre un ou des indicateurs visuels, notamment sous la forme de gravures ou de marquages de cadenas pour indiquer visuellement la position de rotation de la came 81 comme expliqué par la suite.

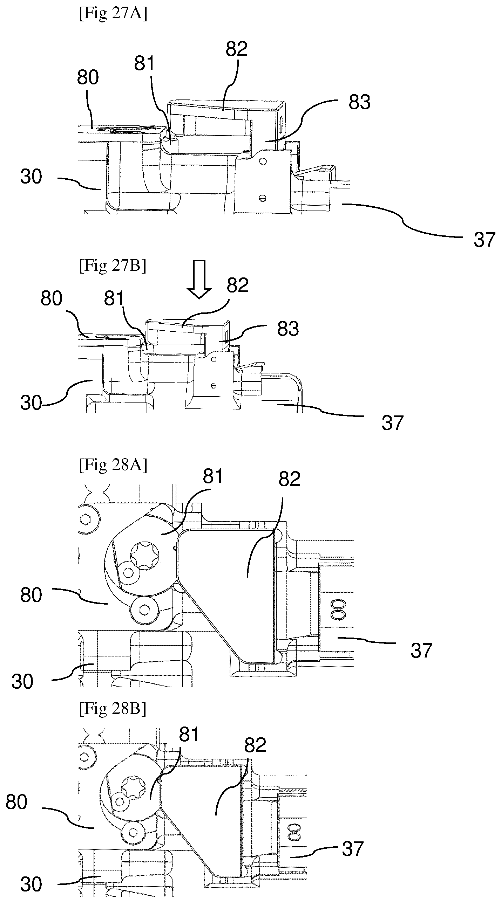

On décrit maintenant en référence aux figures 27A à 28B le fonctionnement du dispositif 8 pour verrouiller la rotation du mécanisme de serrage 5, tout en assurant la détection de l'insertion à la bonne position longitudinale dans le corps 30 de la terminaison 4.

La came 81 est dans une position de blocage de la paroi 82 de la pièce de verrouillage. La position de blocage de la paroi 82 par la came 81 indique en elle-même que le mécanisme de serrage 5 est en position partiellement ou totalement ouverte / desserrée. Cette position de blocage peut être indiquée visuellement à un opérateur par un indicateur visuel sur la platine. Il peut s'agir d'un indicateur montrant un cadenas ouvert. Dans cette position de blocage, la pièce 82, 83 est donc dans sa position de déverrouillage, i.e. la paroi 83 est en retrait de l'intérieur de l'ouverture 38.

Comme symbolisé par la flèche en figure 27B, un appui volontaire ou non sur la paroi 82 vient mettre en interférence mécanique cette dernière avec la came 81.

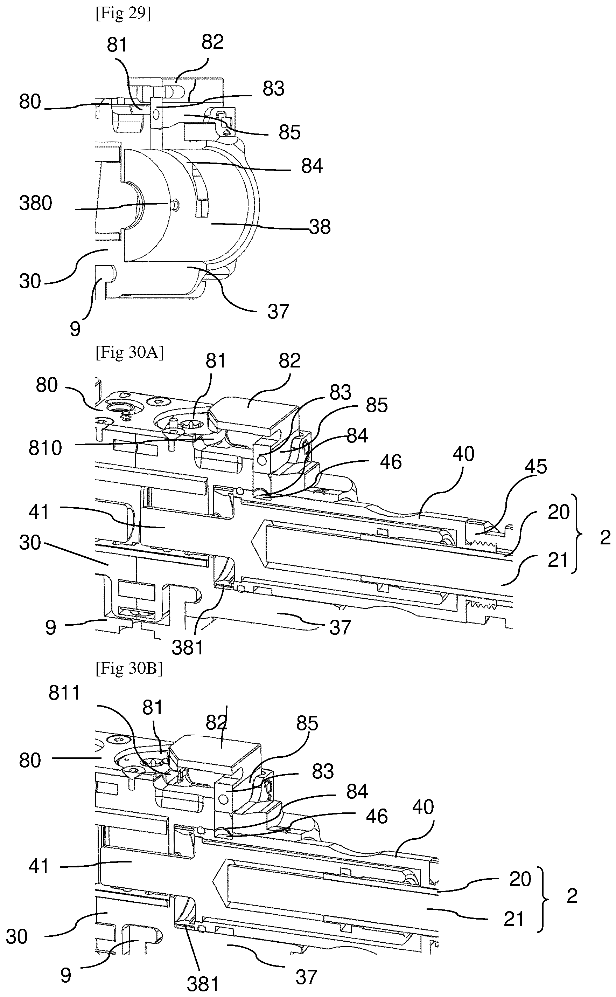

Ainsi, comme montré à la figure 29, dans cette position de blocage de la pièce 82, 83 qui correspond à sa position de déverrouillage, la paroi 83 n'est pas en saillie à l'intérieur de l'ouverture 38 et donc un contact 41 peut y être inséré pour être logé dans la cavité 31 du corps 30. Autrement dit, la paroi 83 n'obstrue pas le diamètre de passage du manchon 40.

L'insertion et le verrouillage du contact 41 sont comme suit.

Le contact 41 est inséré par un opérateur dans l'ouverture 38 et dans la cavité 31 avec la came 81 et la pièce 82, 83 dans la position de la figure 29, jusqu'à ce qu'il y ait un alignement selon l'axe X, ou autrement dit une mise en regard, de la rainure 46 du manchon avec la rainure 84 (figure 30A). Pour garantir l'alignement correct, on peut prévoir, à l'extrémité avant du manchon 40, une jupe 381 venant en butée axiale contre une surface au fond de l'ouverture 38. Dans cette position la partie cylindrique 810 de la came 81 bloque toute translation vers l'intérieur de la pièce 82, 83

Une fois cet alignement correct atteint, l'opérateur peut mettre en rotation la came 81 jusqu'à une position de butée qui peut être indiqué par un indicateur visuel sur la platine 80, par exemple par un cadenas fermé (figure 30B). La rotation de la pièce d'interface 81 entraîne le déplacement du mécanisme de serrage 5, amenant la lame 33 dans sa position déformée de serrage du contact 41, par l'intermédiaire de la translation de la pièce de transmission d'effort 50. Dans cette position de la came 81, son méplat 811 est en regard d'une partie droite de la paroi 82.

Le contact 41 est quant à lui serré par la (les) lame(s) 32, 33 en au moins deux zones d'appui linéique ou surfacique direct.

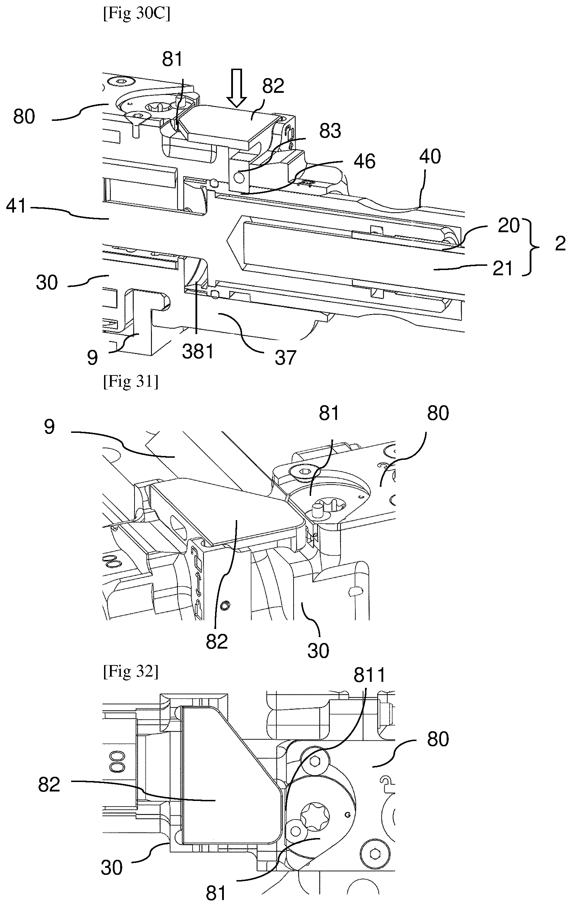

L'opérateur vient alors appuyer sur la paroi 82, comme symbolisé par la flèche en figure 30C, ce qui amène la paroi 83 dans la position de verrouillage dans laquelle elle est insérée dans la rainure 46 du manchon 40 (figure 30C). L'indicateur visuel 85 n'est alors plus apparent de l'extérieur ce qui indique à l'opérateur le bon positionnement de verrouillage de la pièce 82, 83. Le verrouillage de la pièce 82, 83 indique également à l'opérateur que le manchon 40 a été préalablement inséré à sa bonne position longitudinale dans l'ouverture 38. Autrement dit, le verrouillage de la pièce 82, 83 permet la détection de l'insertion de la terminaison 4 à sa bonne position longitudinale dans le module, après serrage du contact 41 par les lames 32, 33.

Le verrouillage du mécanisme de serrage 5 est en outre sécurisé car le méplat 811 de la came est en regard d'une portion droite de la paroi 82 (figure 31).

Ainsi dans cette configuration, si l'opérateur met en rotation la came 81, son méplat 811 vient immédiatement en butée sur la paroi 82, qui est dans sa position de verrouillage (figure 32). Autrement dit, la came 81 ne peut pas se mettre sur une position de déverrouillage qui permettrait de libérer les contraintes exercées par les lames 32, 33 sur le contact 41.

Dans la configuration d'un module où le mécanisme de serrage 5 est activé et où la pièce 82, 83 est verrouillée, préalablement à l'insertion d'une terminaison 4 dans le module, l'opérateur ne pourra pas insérer la terminaison dans le module, du fait de l'interférence entre le manchon 40 et la paroi 83. Pour rendre possible l'insertion d'une terminaison dans le module, l'opérateur doit alors préalablement à celle-ci amener la pièce 82, 83 dans sa position de déverrouillage, puis amener la came 81 dans position de déverrouillage.

D'autres variantes et améliorations peuvent être prévues sans pour autant sortir du cadre de l'invention.

On peut prévoir des modules de dimensions différentes avec un nombre de cavités différent pour loger des terminaisons de câble électrique 4 de tailles différentes.

On peut prévoir également une fixation et un verrouillage d'un module de connexion dans un rail-support 9, comme montré sur le mode des figures 26 à 32.

Comme cela ressort de la description, pour réaliser le serrage d'un contact de terminaison électrique on peut prévoir un module de connexion avec une seule lame dont au moins une partie est élastiquement déformable, ou avec une lame rigide et une lame déformable.

Si dans les exemples illustrés, le mécanisme de serrage à came est décrit en relation avec le premier mode à une lame rigide et une lame élastiquement déformable tandis que le mécanisme de serrage à levier pivotant est décrit en relation avec une seule lame à section en forme de U, on peut aussi envisager un levier pivotant pour la déformation de la lame serrant le contact avec une lame rigide et une came de serrage pour rapprocher les branches de la seule lame en U.

Dans les exemples illustrés, la lame déformable 33 est électriquement conductrice. On peut également envisager une lame électriquement isolante.

Comme montré en figures 26A et 29, en lieu et place de rainures droites 39, on peut prévoir une ou plusieurs excroissances 380, par exemple réalisé(s) par moulage, en saillie à l'intérieur du corps 30 notamment à l'intérieur de l'ouverture 38 pour permettre d'empêcher la rotation du manchon 40 et donc du contact 41 par glissement, une fois serré dans le module de connexion. Une excroissance 380 peut prendre la forme d'une nervure / cannelure longitudinale intérieure moulée, pouvant s'intercaler entre les nervures 42 du manchon. Un excroissance 380 peut également prendre la forme d'un pion cylindrique métallique inséré à travers la paroi 37 du corps 30, perpendiculairement à l'axe X.

L'expression « comportant un » doit être comprise comme étant synonyme de « comportant au moins un », sauf si le contraire est spécifié.

## Revendications

1. Module de connexion électrique (3, 3', 3" ; 3.1, 3.2, 3.3), destiné à constituer une partie d'un bornier d'un ensemble de connexion, d'axe longitudinal (X) comprenant:
- au moins un corps (30) en matériau électriquement isolant comprenant au moins une cavité (31) s'étendant selon l'axe X et adaptée pour loger une terminaison de câble électrique (4), comprenant un contact (41), de préférence cylindrique, destiné à être raccordé, de préférence serti sur un câble électrique (2) ;
- au moins une lame (32, 33), comprenant au moins une partie d'une lame, qui est électriquement conductrice et logée fixement ou avec jeu, au moins en partie dans la cavité, et au moins une partie d'une lame, qui est élastiquement déformable entre une position de repos dans laquelle elle définit un espace adapté pour permettre l'insertion, selon l'axe X, du contact de la terminaison de câble électrique, et une position déformée dans laquelle elle serre, transversalement à l'axe X, le contact de la terminaison de câble électrique de sorte à établir une continuité électrique entre le contact et la(les) lame(s) ;
- au moins un mécanisme de serrage (5), destiné à être actionné par rotation depuis l'extérieur, comprenant un moyen de transformation d'une rotation en une translation transversalement à l'axe X, qui exerce un effort (F) sur la partie déformable de lame pour l'amener depuis sa position de repos dans sa position déformée de serrage du contact de la terminaison de câble électrique,
le module de connexion étant **caractérisé par** la (les) lame(s) étant conformée(s) pour constituer au moins deux zones d'appui linéique ou surfacique direct avec le contact de la terminaison électrique dans la position déformée, les aux moins deux zones d'appui étant réparties angulairement, de préférence de manière régulière, à la périphérie du contact.

2. Module de connexion électrique selon la revendication 1 , comprenant une seule lame de section transversale à l'axe X, sensiblement en U.

3. Module de connexion électrique selon la revendication 2, le mécanisme de serrage (5) comprenant un levier monté pivotant dans le corps et accessible depuis l'extérieur de sorte déformer au moins l'une des deux branches du U et ainsi l'amener de sa position de repos à sa position déformée.

4. Module de connexion électrique selon la revendication 1, comprenant au moins une première lame (32), électriquement conductrice, logée dans la cavité et rigide, et au moins une deuxième lame (33), électriquement conductrice, logée dans la cavité et comprenant au moins une partie déformable élastiquement entre la position de repos et la position déformée.

5. Module de connexion électrique selon la revendication 4, le mécanisme de serrage (5) comprenant :
- une pièce de transmission d'effort (50), logée dans le corps,
- une pièce d'interface (51) avec un outil, montée libre en rotation dans un logement (34) du corps et adaptée pour être mise en rotation par l'outil,
- une came de serrage (52), solidaire ou réalisée intégralement avec la pièce d'interface, la rotation de la came de serrage provoquant la translation de la pièce de transmission d'effort, transversalement à l'axe X, qui exerce un effort (F) sur la deuxième lame pour l'amener depuis sa position de repos dans sa position déformée de serrage du contact de la terminaison de câble électrique.

6. Module de connexion électrique selon l'une des revendications 4 ou 5, la pièce de transmission d'effort comprenant une portion de verrouillage (53) adaptée pour s'insérer, lors de la translation de ladite pièce, dans une gorge périphérique du contact de la terminaison électrique et ainsi verrouiller ce dernier dans le corps, de préférence avant ou simultanément au serrage du contact.

7. Module de connexion électrique selon l'une des revendications 4 à 6, la came de serrage étant montée en rotation entre deux branches (320, 321) de la première lame.

8. Module de connexion électrique selon l'une des revendications 5 à 7, la pièce de transmission d'effort comprenant en outre une portion de rappel pour ramener dans sa position de repos la deuxième lame, lors du desserrage après déverrouillage du contact.

9. Module de connexion électrique selon l'une des revendications 4 à 8, comprenant un dispositif de verrouillage/déverrouillage (7, 8) du mécanisme de serrage, lorsque la came de serrage (52, 81) est dans sa position de rotation correspondant à la position déformée de la deuxième lame.

10. Module de connexion électrique selon la revendication 9, le dispositif de verrouillage/déverrouillage comprenant :
- une pièce d'interface (81) avec un outil (H), montée libre en rotation dans un logement du corps et adaptée pour être mise en rotation par l'outil, la pièce d'interface étant une pièce cylindrique pourvue d'un méplat (811) en formant ainsi une came,
- une pièce de verrouillage (82, 83), dont une paroi (83) s'étend transversalement à l'axe longitudinal X, montée en translation dans le corps (30) entre une position de verrouillage du mécanisme de serrage et une position de déverrouillage, la pièce de verrouillage (82, 83) étant agencée relativement à la pièce d'interface (81), de sorte que lorsque cette dernière est :
dans sa position de déverrouillage, la partie cylindrique de la came (81) interfère mécaniquement avec une autre paroi de la pièce, ce qui empêche le passage à sa position de verrouillage,
dans sa position de verrouillage, toute rotation de la came (81) met son méplat (811) en butée contre une portion droite de ladite autre paroi (82) de la pièce de verrouillage, ce qui empêche le passage à sa position de déverrouillage.

11. Module selon la revendication 10, lorsque la pièce est dans sa position de verrouillage, la paroi (83) est en saillie à l'intérieur d'une ouverture (38), et lorsque la pièce est dans sa position de déverrouillage, ladite paroi (83) est en retrait de l'intérieur de l'ouverture (38), la paroi (83) étant adaptée pour s'insérer dans une gorge transversale du manchon (40) de la terminaison électrique et ainsi verrouiller ce dernier dans le corps, de préférence après ou simultanément au serrage du contact.

12. Module de connexion électrique selon l'une des revendications précédentes, le corps comprenant une ouverture (38) en regard de la cavité, munie intérieurement d'au moins une excroissance (380), ou d'une pluralité de rainures droites longitudinales (39), de préférence réparties régulièrement angulairement, adaptées chacune pour respectivement être reçu entre deux nervures adjacentes du manchon (40) de la terminaison de câble électrique, ou recevoir une cannelure droite (42) ménagée autour du manchon.

13. Module de connexion électrique selon l'une des revendications précédentes, la lame comprenant une portion (322) s'étendant à l'extérieur du corps et adaptée pour être reliée électriquement par soudure ou vissage à un busbar (6).

14. Module de connexion électrique selon l'une des revendications 4 à 12, comprenant:
- deux corps alignés ou côte-à-côte et fixés entre eux ou formant une seule pièce monobloc,
- une seule première lame commune aux cavités des deux corps,
- au moins deux deuxièmes lames indépendantes l'une de l'autre, pour serrer chacune un contact,
- au moins deux mécanismes de serrage indépendants l'un de l'autre.

15. Module de connexion électrique selon l'une des revendications 4 à 12, comprenant :
- deux corps alignés ou côte-à-côte et fixés entre eux ou formant une seule pièce monobloc,
- une seule première lame commune aux cavités des deux corps,
- une seule deuxième lame, comprenant plusieurs parties déformables indépendantes chacune pour serrer chacune un contact,
- au moins deux mécanismes de serrage indépendants l'un de l'autre.

16. Ensemble de connexion à bornier, comprenant une pluralité de modules de connexion électrique (3.1, 3.2, 3.3) selon l'une des revendications précédentes, de dimensions identiques ou différentes avec des cavités de dimensions identiques ou différentes pour loger des terminaisons électriques de dimensions identiques ou différentes.

17. Structure, notamment d'aéronef, comprenant au moins un module de connexion électrique selon l'une des revendications 1 à 15 et/ou au moins un ensemble de connexion à bornier selon la revendication 16, de préférence fixé(s) sur un rail-support (9), destiné lui-même à être fixé à la structure.

## Patentansprüche

1. Elektrisches Anschlussmodul (3, 3', 3"; 3.1, 3.2, 3.3), das dazu bestimmt ist, einen Teil einer Klemmenleiste einer Anschlussanordnung zu bilden, mit der Längsachse (X), umfassend:
- mindestens einen Körper (30) aus elektrisch isolierendem Material, der mindestens einen Hohlraum (31) umfasst, der sich entlang der Achse X erstreckt und dazu geeignet ist, einen elektrischen Kabelabschluss (4) aufzunehmen, der einen, bevorzugt zylindrischen, Kontakt (41) umfasst, der dazu bestimmt ist, an ein elektrisches Kabel (2) angeschlossen, bevorzugt gecrimpt, zu werden;
- mindestens eine Feder (32, 33), umfassend mindestens einen Teil einer Feder, der elektrisch leitend ist und fest oder mit Spiel mindestens zum Teil in dem Hohlraum aufgenommen ist, und mindestens einen Teil einer Feder, der elastisch verformbar ist zwischen einer Ruhestellung, in der er einen Raum definiert, der dazu geeignet ist, das Einführen des Kontakts des elektrischen Kabelabschlusses entlang der Achse X zu ermöglichen, und einer verformten Stellung, in der er den Kontakt des elektrischen Kabelabschlusses quer zu der Achse X klemmt, so dass ein elektrischer Durchgang zwischen dem Kontakt und der(den) Feder(n) hergestellt wird;
- mindestens einen Klemmmechanismus (5), der dazu bestimmt ist, durch Rotation von außen betätigt zu werden, umfassend ein Mittel zum Umwandeln einer Rotation in eine Translation quer zu der Achse X, das eine Kraft (F) auf den verformbaren Teil der Feder ausübt, um ihn aus seiner Ruhestellung in seine verformte Stellung zum Klemmen des Kontakts des Stromkabelabschlusses zu führen, wobei das Anschlussmodul **dadurch gekennzeichnet ist, dass** die Feder(n) dazu ausgebildet ist(sind), mindestens zwei Bereiche zur direkten linearen oder flächigen Anlage mit dem Kontakt des elektrischen Abschlusses in der verformten Stellung zu bilden, wobei die mindestens zwei Anlagebereiche winklig, bevorzugt regelmäßig, am Umfang des Kontakts verteilt sind.

2. Elektrisches Anschlussmodul nach Anspruch 1, umfassend eine einzige Feder mit im Wesentlichen U-förmigem Querschnitt quer zu der Achse X.

3. Elektrisches Anschlussmodul nach Anspruch 2, wobei der Klemmmechanismus (5) einen Hebel umfasst, der schwenkbar in dem Körper gelagert ist und von außen zugänglich ist, so dass er mindestens einen der beiden Schenkel des U verformt und ihn dadurch aus seiner Ruhestellung in seine verformte Stellung führt.

4. Elektrisches Anschlussmodul nach Anspruch 1, umfassend mindestens eine erste, elektrisch leitende, Feder (32), die in dem Hohlraum aufgenommen ist und starr ist, und mindestens eine zweite, elektrisch leitende, Feder (33), die in dem Hohlraum aufgenommen ist und mindestens einen zwischen der Ruhestellung und der verformten Stellung elastisch verformbaren Teil umfasst.

5. Elektrisches Anschlussmodul nach Anspruch 4, wobei der Klemmmechanismus (5) umfasst:
- ein Kraftübertragungsteil (50), das in dem Körper aufgenommen ist,
- ein Schnittstellenteil (51) mit einem Werkzeug, das drehbeweglich in einer Aufnahme (34) des Körpers gelagert ist und dazu geeignet ist, durch das Werkzeug in Rotation versetzt zu werden,
- einen Klemmnocken (52), der mit dem Schnittstellenteil fest verbunden oder integral ausgeführt ist, wobei die Rotation des Klemmnockens die Translation des Kraftübertragungsteils, quer zu der Achse X, bewirkt, das eine Kraft (F) auf die zweite Feder ausübt, um sie aus ihrer Ruhestellung in ihre verformte Stellung zum Klemmen des Kontakts des elektrischen Kabelabschlusses zu führen.

6. Elektrisches Anschlussmodul nach einem der Ansprüche 4 oder 5, wobei das Kraftübertragungsteil einen Verriegelungsabschnitt (53) umfasst, der dazu geeignet ist, bei der Translation des Teils in eine umfängliche Nut des Kontakts des elektrischen Abschlusses eingeführt zu werden und Letzteren dadurch in dem Körper zu verriegeln, bevorzugt vor oder gleichzeitig mit dem Klemmen des Kontakts.

7. Elektrisches Anschlussmodul nach einem der Ansprüche 4 bis 6, wobei der Klemmnocken drehbar zwischen zwei Schenkeln (320, 321) der ersten Feder gelagert ist.

8. Elektrisches Anschlussmodul nach einem der Ansprüche 5 bis 7, wobei das Kraftübertragungsteil ferner einen Rückholabschnitt umfasst, um die zweite Feder beim Lösen nach dem Entriegeln des Kontakts in ihre Ruhestellung zurückzuführen.

9. Elektrisches Anschlussmodul nach einem der Ansprüche 4 bis 8, umfassend eine Vorrichtung zur Verriegelung/Entriegelung (7, 8) des Klemmmechanismus, wenn der Klemmnocken (52, 81) in seiner Rotationsstellung ist, die der verformten Stellung der zweiten Feder entspricht.

10. Elektrisches Anschlussmodul nach Anspruch 9, wobei die Vorrichtung zur Verriegelung/Entriegelung umfasst:
- ein Schnittstellenteil (81) mit einem Werkzeug (H), das drehbeweglich in einer Aufnahme des Körpers gelagert ist und dazu geeignet ist, durch das Werkzeug in Rotation versetzt zu werden, wobei das Schnittstellenteil ein zylindrisches Teil ist, das mit einer Abflachung (811) versehen ist, wodurch ein Nocken gebildet wird,
- ein Verriegelungsteil (82, 83), von dem eine Wand (83) sich quer zu der Längsachse X erstreckt und das in dem Körper (30) zwischen einer Verriegelungsstellung des Klemmmechanismus und einer Entriegelungsstellung translatorisch gelagert ist, wobei das Verriegelungsteil (82, 83) relativ zu dem Schnittstellenteil (81) so angeordnet ist, dass, wenn Letzteres:
in seiner Entriegelungsstellung ist, der zylindrische Teil des Nockens (81) mechanisch mit einer anderen Wand des Teils interferiert, was den Übergang in seine Verriegelungsstellung verhindert,
in seiner Verriegelungsstellung ist, jede Rotation des Nockens (81) dessen Abflachung (811) in Anschlag an einen geraden Abschnitt der anderen Wand (82) des Verriegelungsteils bringt, was den Übergang in seine Entriegelungsstellung verhindert.

11. Modul nach Anspruch 10, wenn das Teil in seiner Verriegelungsstellung ist, springt die Wand (83) zum Innenraum einer Öffnung (38) vor, und wenn das Teil in seiner Entriegelungsstellung ist, ist die Wand (83) von dem Innenraum der Öffnung (38) zurückversetzt, wobei die Wand (83) dazu geeignet ist, in eine Quernut der Hülse (40) des elektrischen Abschlusses eingeführt zu werden und Letztere dadurch in dem Körper zu verriegeln, bevorzugt nach oder gleichzeitig mit dem Klemmen des Kontakts.

12. Elektrisches Anschlussmodul nach einem der vorhergehenden Ansprüche, wobei der Körper eine Öffnung (38) gegenüber dem Hohlraum umfasst, die innen mit mindestens einem Vorsprung (380) oder mit einer Mehrzahl von geraden Längsrillen (39) versehen ist, die bevorzugt winklig regelmäßig verteilt sind und von denen jede dazu geeignet ist, zwischen zwei benachbarten Rippen der Hülse (40) des elektrischen Kabelabschlusses aufgenommen zu werden oder eine um die Hülse herum ausgebildete gerade Riffelung (42) aufzunehmen.

13. Elektrisches Anschlussmodul nach einem der vorhergehenden Ansprüche, wobei die Feder einen Abschnitt (322) umfasst, der sich außerhalb des Körpers erstreckt und dazu geeignet ist, durch Schweißen oder Schrauben elektrisch mit einer Stromschiene (6) verbunden zu werden.

14. Elektrisches Anschlussmodul nach einem der Ansprüche 4 bis 12, umfassend:
- zwei fluchtende oder nebeneinander liegende und untereinander befestigte oder ein einziges einstückiges Teil bildende Körper,
- eine einzige erste Feder, die den Hohlräumen der beiden Körper gemeinsam ist,
- mindestens zwei voneinander unabhängige zweite Federn, um jeweils einen Kontakt zu klemmen,
- mindestens zwei voneinander unabhängige Klemmmechanismen.

15. Elektrisches Anschlussmodul nach einem der Ansprüche 4 bis 12, umfassend:
- zwei fluchtende oder nebeneinander liegende und untereinander befestigte oder ein einziges einstückiges Teil bildende Körper,
- eine einzige erste Feder, die den Hohlräumen der beiden Körper gemeinsam ist,
- eine einzige zweite Feder, umfassend mehrere unabhängige verformbare Teile, jedes, um jeweils einen Kontakt zu klemmen,
- mindestens zwei voneinander unabhängige Klemmmechanismen.

16. Anschlussanordnung mit Klemmenleiste, umfassend eine Mehrzahl von elektrischen Anschlussmodulen (3.1, 3.2, 3.3) nach einem der vorhergehenden Ansprüche mit gleichen oder unterschiedlichen Abmessungen mit Hohlräumen mit gleichen oder unterschiedlichen Abmessungen zum Aufnehmen von elektrischen Abschlüssen mit gleichen oder unterschiedlichen Abmessungen.

17. Struktur, insbesondere Luftfahrzeug, umfassend mindestens ein elektrisches Anschlussmodul nach einem der Ansprüche 1 bis 15 und/oder mindestens eine Anschlussanordnung mit Klemmenleiste nach Anspruch 16, das(die) bevorzugt an einer Trägerschiene (9) befestigt ist(sind), die wiederum dazu bestimmt ist, an der Struktur befestigt zu werden.

## Claims

1. Electrical connection module (3, 3', 3"; 3.1, 3.2, 3.3) intended to form part of a terminal block of a connection assembly, of longitudinal axis (X), comprising:
- at least one body (30) made of electrically insulating material comprising at least one cavity (31) extending along the axis X and designed to accommodate an electric cable termination (4), comprising a preferably cylindrical contact (41) intended to be attached to, preferably crimped onto, an electric cable (2);
- at least one strip (32, 33), comprising at least one part of a strip which is electrically conductive and accommodated, fixedly or with play, at least partially in the cavity, and at least one part of a strip which is elastically deformable between a rest position, in which it defines a space designed to enable the insertion of the contact of the electric cable termination along the axis X, and a deformed position in which it clamps the contact of the electric cable termination transversely to the axis X so as to establish electrical continuity between the contact and the one or more strips;
- at least one clamping mechanism (5) intended to be actuated by rotation from the outside, comprising a means for converting a rotational movement into a translational movement transversely to the axis X, which exerts a force (F) on the deformable part of the strip to bring it from its rest position to its deformed position of clamping the contact of the electric cable termination,
the connection module being **characterized by** the one or more strips being shaped so as to form at least two areas of direct linear or surface contact with the contact of the electric termination in the deformed position, the at least two contact areas being, preferably regularly, angularly distributed around the periphery of the contact.

2. Electrical connection module according to Claim 1, comprising a single strip with a substantially U-shaped cross section transversely to the axis X.

3. Electrical connection module according to Claim 2, the clamping mechanism (5) comprising a lever mounted pivotably in the body and accessible from the outside so as to deform at least one of the two arms of the U and thus bring it from its rest position to its deformed position.

4. Electrical connection module according to Claim 1, comprising at least one electrically conductive, rigid first strip (32) accommodated in the cavity, and at least one electrically conductive second strip (33) accommodated in the cavity and comprising at least one part which is elastically deformable between the rest position and the deformed position.

5. Electrical connection module according to Claim 4, the clamping mechanism (5) comprising:
- a force transmission component (50) accommodated in the body,
- an interface component (51) for a tool, this interface component being freely rotatably mounted in a receiving portion (34) of the body and designed to be made to rotate by the tool,
- a clamping cam (52) secured to or integrally formed with the interface component, the rotation of the clamping cam causing the force transmission component to move in translation transversely to the axis X, which exerts a force (F) on the second strip to bring it from its rest position to its deformed position of clamping the contact of the electric cable termination.

6. Electrical connection module according to either of Claims 4 and 5, the force transmission component comprising a locking portion (53) designed to be inserted, while said component is moving in translation, into a peripheral recess of the contact of the electric termination and thus lock the latter in the body, preferably before or at the same time as the contact is clamped.

7. Electrical connection module according to one of Claims 4 to 6, the clamping cam being rotatably mounted between two arms (320, 321) of the first strip.

8. Electrical connection module according to one of Claims 5 to 7, the force transmission component additionally comprising a return portion for returning the second strip to its rest position, during the unclamping operation after the contact is unlocked.

9. Electrical connection module according to one of Claims 4 to 8, comprising a locking/unlocking device (7, 8) for locking/unlocking the clamping mechanism, when the clamping cam (52, 81) is in its rotational position corresponding to the deformed position of the second strip.

10. Electrical connection module according to Claim 9, the locking/unlocking device comprising:
- an interface component (81) for a tool (H), this interface component being freely rotatably mounted in a receiving portion of the body and designed to be made to rotate by the tool, the interface component being a cylindrical component provided with a flattened portion (811), thereby forming a cam,
- a locking component (82, 83), of which one wall (83) extends transversely to the longitudinal axis X and which is mounted movably in translation in the body (30) between a clamping-mechanism locking position and an unlocking position, the locking component (82, 83) being arranged relative to the interface component (81) such that, when the latter is:
in its unlocking position, the cylindrical part of the cam (81) mechanically interferes with another wall of the component, thereby preventing it from transitioning to its locking position,
in its locking position, any rotation of the cam (81) brings its flattened portion (811) into abutment against a straight portion of said other wall (82) of the locking component, thereby preventing it from transitioning to its unlocking position.

11. Module according to Claim 10, when the component is in its locking position, the wall (83) protrudes into an opening (38), and when the component is in its unlocking position, said wall (83) is set back from the inside of the opening (38), the wall (83) being designed to be inserted into a transverse recess of the sleeve (40) of the electric termination and thus lock the latter in the body, preferably after or at the same time as the contact is clamped.

12. Electrical connection module according to one of the preceding claims, the body comprising an opening (38) which is next to the cavity and is provided on the inside with at least one protuberance (380), or a plurality of longitudinal straight, preferably angularly regularly distributed, grooves (39) each designed to respectively be received between two adjacent ribs of the sleeve (40) of the electric cable termination, or receive a straight spline (42) formed around the sleeve.

13. Electrical connection module according to one of the preceding claims, the strip comprising a portion (322) extending out of the body and designed to be electrically connected to a busbar (6) by welding or screwing.

14. Electrical connection module according to one of Claims 4 to 12, comprising:
- two aligned or side-by-side bodies fixed to one another or forming a single one-piece component,
- a single first strip common to the cavities of the two bodies,
- at least two second, mutually independent strips, each for clamping a contact,
- at least two mutually independent clamping mechanisms.

15. Electrical connection module according to one of Claims 4 to 12, comprising:
- two aligned or side-by-side bodies fixed to one another or forming a single one-piece component,
- a single first strip common to the cavities of the two bodies,
- a single second strip comprising multiple independent, deformable parts, each for clamping a contact,
- at least two mutually independent clamping mechanisms.

16. Terminal block connection assembly comprising a plurality of electrical connection modules (3.1, 3.2, 3.3) according to one of the preceding claims, of identical or different dimensions with cavities of identical or different dimensions for accommodating electric terminations of identical or different dimensions.

17. Structure, in particular for an aircraft, comprising at least one electrical connection module according to one of Claims 1 to 15 and/or at least one terminal block connection assembly according to Claim 16, preferably fixed on a rail support (9), which is itself intended to be fixed to the structure.
